# EUROPÄISCHE PATENTSCHRIFT

(11) **EP 4 376 981 B1**
(45) Veröffentlichungstag und Bekanntmachung des Hinweises auf die Patenterteilung: **01.04.2026**
(21) Anmeldenummer: 22732461.3
(22) Anmeldetag: 31.05.2022
(51) Int. Cl.: B01D 46/00, B01D 46/30, B01D 46/48, B01D 50/20

(54) **FILTERVORRICHTUNG ZUM FILTERN EINES PROZESSGASES, VORRICHTUNG ZUR ADDITIVEN HERSTELLUNG DREIDIMENSIONALER OBJEKTE UND VERFAHREN ZUM FILTERN EINES PROZESSGASES**
FILTERING DEVICE FOR FILTERING A PROCESS GAS, DEVICE FOR ADDITIVE MANUFACTURING OF THREE-DIMENSIONAL OBJECTS AND METHOD FOR FILTERING A PROCESS GAS
DISPOSITIF DE FILTRAGE POUR FILTRER UN GAZ DE TRAITEMENT, DISPOSITIF POUR LA FABRICATION ADDITIVE D'OBJETS TRIDIMENSIONNELS ET PROCÉDÉ DE FILTRAGE D'UN GAZ DE TRAITEMENT

(30) Priorität: 27.07.2021 DE 102021208112
(43) Veröffentlichungstag der Anmeldung: 05.06.2024
(73) Patentinhaber: EOS GmbH Electro Optical Systems, 82152 Krailling (DE)
(72) Erfinder: KLEINHANS, Ulrich, 86931 Prittriching (DE); STRÖBEL, Philip, 91746 Weidenbach (DE)
(74) Vertreter: Prüfer & Partner mbB Patentanwälte · Rechtsanwälte
(86) Internationale Anmeldenummer: PCT/EP2022/064737
(87) Internationale Veröffentlichungsnummer: WO 2023/006278

(56) Entgegenhaltungen:
- EP-A2- 3 248 666
- WO-A1-2020/120623
- DE-A1- 102017 207 415
- DE-A1- 102020 102 034
- DE-A1- 19 938 903
- US-A1- 2005 147 548

## Beschreibung

Die vorliegende Erfindung bezieht sich auf Filtervorrichtungen zum Filtern eines Prozessgases. Die vorliegende Erfindung bezieht sich ferner auf eine Vorrichtung zur additiven Herstellung dreidimensionaler Objekte, welche eine derartige Filtervorrichtung umfasst. Die vorliegende Erfindung bezieht sich ferner auf ein Verfahren zum Filtern eines Prozessgases.

Vorrichtungen und Verfahren zur additiven Herstellung dreidimensionaler Objekte werden beispielsweise bei Verfahren verwendet, die als "Rapid Prototping", "Rapid Tooling" und "Additive Manufacturing" bezeichnet werden. Ein Beispiel eines solchen Verfahrens ist unter dem Namen "selektives Lasersintern" oder "selektives Laserschmelzen" bekannt. Hierbei wird wiederholt eine Schicht eines in der Regel pulverförmigen Aufbaumaterials aufgebracht und das Aufbaumaterial in jeder Schicht durch selektives Bestrahlen von dem Querschnitt des herzustellenden Objekts in dieser Schicht entsprechenden Stellen mit einem Laserstrahl selektiv verfestigt, beispielsweise indem das Aufbaumaterial an diesen Stellen durch die vom Laserstrahl bereitgestellte Energie teilweise oder vollständig geschmolzen wird und die Schmelze anschließend beim Abkühlen erstarrt. Weitere Details sind beispielweise in EP 2 978 589 B1 beschrieben.

Während des Herstellungsvorgangs wird oftmals in der Prozesskammer, in der das Aufbaumaterial selektiv mittels Strahlung behandelt wird, eine Prozessgasatmosphäre aufrechterhalten. Bei der Prozessgasatmosphäre handelt es sich in der Regel eine Inertgasatmosphäre (auch als "Schutzgasatmosphäre" bezeichnet), da manche Aufbaumaterialien, insbesondere wenn diese metallhaltig sind, bei den auftretenden hohen Temperaturen zur Oxidation neigen, was die Ausbildung von Objekten verhindern oder zumindest die Ausbildung von Objekten mit wunschgemäßem Materialgefüge verhindern würde. Beispielsweise könnte Titan anfangen, bei Anwesenheit von Sauerstoff unkontrolliert zu brennen. In der Regel wird dabei ein Prozessgasstrom über die Bauebene, also die Oberfläche einer zu verfestigenden Aufbaumaterialschicht, geleitet.

Während des Prozesses wird infolge des Bestrahlens häufig ein Teil des Aufbaumaterials verdampft, was nach der Wiederverfestigung der entstandenen Dämpfe zur Ausbildung von Kondensaten führt. Ferner wird während des Prozesses häufig ein Teil des Aufbaumaterials aufgewirbelt. Darüber hinaus können sich während des Prozesses Spratzer bilden. Dabei handelt es sich häufig um erstarrte Tropfen der Schmelze des Aufbaumaterials mit einem Durchmesser zwischen beispielsweise 20 und 300 µm. Spratzer werden beispielsweise bei einem Einstechen des Laserstrahls aus der entstehenden Schmelze bzw. dem Schmelzbad herausgeschleudert. Auch solche Spratzer können das Prozessgas verunreinigen. Wegen der Kondensate und/oder des aufgewirbelten Aufbaumaterials und/oder der Spratzer und/oder anderer vom Prozessgas mitgeführter Verunreinigungen in Form von Partikeln oder Tröpfchen ist es erforderlich, das Prozessgas von diesen unerwünschten Verunreinigungen zu befreien. Dies ist insbesondere dann der Fall, wenn das Prozessgas im Kreislauf geführt wird, d.h. wenn es nach seinem Austreten aus der Prozesskammer und nach seiner Filterung wieder in die Prozesskammer eingeleitet werden soll. Ein derartiger Gaskreislauf wird gelegentlich auch als "Umwälzung" oder "Umluft" bezeichnet, letzteres selbst wenn es sich bei dem Prozessgas nicht um Luft handelt. Häufig handelt es sich bei diesen unerwünschten Verunreinigungen um Kondensatpartikel, die aus dem Metalldampf bei Abkühlung auskondensieren und in der Regel einer Primärpartikelgröße von beispielsweise 20 nm bis 50 nm aufweisen und welche zu größeren Agglomeraten zusammengeschlossen sein können, und/oder um pulverförmiges Aufbaumaterial mit Partikelgrößen zwischen beispielsweise 1 und 50 µm. In US 2014/0287080 ist beschrieben, dass zu diesem Zweck ein geschlossener Gasströmungskreis bereitgestellt wird, mit dem eine Gasströmung durch die Prozesskammer einer selektiven Laserschmelzvorrichtung geleitet wird, wobei in dem Gasströmungskreis zwei Filtereinrichtungen angeordnet sind, die jeweils ein Filterelement aufweisen.

In DE 10 2014 207 160 A1 wird eine zyklische Abreinigung eines Filterelements einer Umluftfiltereinrichtung mittels eines Gasdruckstoßes beschrieben.

Insbesondere bei Verwendung metallhaltiger bzw. metallischer Aufbaumaterialen (z.B. Titan oder Titanlegierungen) neigen die Partikel unter hohen Temperaturen zu einer Reaktion mit oxidativen Materialen, wobei die Reaktionsrate bei hohen Temperaturen erhöht ist. Metallkondensat kann sich dabei bei Raumtemperatur und Luftsauerstoffkontakt spontan selbst entzünden, ist also in der Regel pyrophor. Hierdurch kann es gerade im Bereich von Filterelementen, an denen sich die in dem Prozessgas mitgeführten Partikel ansammeln, zu unkontrollierten Filterbränden oder Staubexplosionen kommen. Dieses Risiko besteht verstärkt, wenn bei einem Wechsel des Filterelements spontan (d.h. zu schnell und/oder in zu großer Menge) Sauerstoff an das Filterelement gelangt. Wenn beispielsweise die Filterkammer schnell geöffnet wird, kann plötzlich so viel Sauerstoff in der Filterkammer vorhanden sein, dass der Filterrückstand oxidiert wird und die dabei frei werdende Reaktionswärme die Geschwindigkeit der Oxidation weiter steigert. In solchen Fällen kann es geschehen, dass die Reaktion unkontrolliert verläuft und ein Brand (Filterbrand) entsteht.

EP 1 527 807 A1 beschreibt zum Abscheiden von Staubbestandteilen aus einem explosionsfähigen Staub-Luft-Gemisch eine Inertisierung durch Verwendung von Additiv-Partikeln als Inertisierungsmittel, mit denen die eingesetzten Filterplatten beladen werden. Die Menge der Additiv-Partikel wird dabei so gewählt, dass die Mischung aus diesen Partikeln mit einem eingetragenen Staub zumindest bis zum Erreichen eines oberen Füllstandes eines Staubbehälters möglichst kein brennbares Gemisch darstellt. Als Additiv-Partikel werden in Verbindung mit Aluminium-Staub Calciumcarbonat-Partikel und Siliziumdioxid-Partikel genannt. Durch die Verwendung zusätzlicher Partikel wird neben deren Bereitstellung und deren Kosten aber auch ein schnelleres Erreichen des oberen Füllstandes in Kauf genommen, so dass der Staubbehälter öfter entleert werden muss. Die Additiv-Partikel können auch als "Filterhilfsstoff" bezeichnet werden.

In DE 10 2017 207 415 A1 ist die Behandlung von Partikeln, die von einem Filterelement abgetrennt worden sind, in einer separaten Behandlungskammer außerhalb der Filterkammer beschrieben. Dabei ist die Ausbildung oberflächlicher Oxidschichten auf den Partikeln durch Zugabe von Sauerstoff in die Behandlungskammer, in der sich die Partikel befinden, beschrieben. DE 199 38 903 A1, DE 10 2020 102034 A1 und WO 2020/120623 A1 zeigen weitere relevante Vorrichtungen.

Die Aufgabe der vorliegenden Erfindung besteht darin, eine alternative bzw. verbesserte Filtervorrichtung zum Filtern eines Prozessgases bzw. eine alternative bzw. verbesserte Vorrichtung zur additiven Herstellung dreidimensionaler Objekte bzw. ein alternatives bzw. verbessertes Verfahren zum Filtern eines Prozessgases bereitzustellen.

Diese Aufgabe wird gelöst durch die Filtervorrichtung gemäß Anspruch 1, die Vorrichtung zur additiven Herstellung dreidimensionaler Objekte gemäß Anspruch 11 und das Verfahren gemäß Anspruch 12.

Weiterbildungen der Erfindung sind in den Unteransprüchen angegeben. Dabei kann das Verfahren auch durch die in der nachfolgenden Beschreibung und in den Unteransprüchen angeführten Merkmale der Vorrichtungen weitergebildet sein. Umgekehrt können die Vorrichtungen auch durch die in der nachfolgenden Beschreibung und in den Unteransprüchen angeführten Merkmale des Verfahrens weitergebildet sein. Ferner können die in der nachfolgenden Beschreibung und in den Unteransprüchen angeführten Merkmale der Filtervorrichtung auch zur Weiterbildung der Vorrichtung zur additiven Herstellung dreidimensionaler Objekte genutzt werden und umgekehrt.

Bei der erfindungsgemäßen Filtervorrichtung handelt es sich um eine Filtervorrichtung zum Filtern eines Prozessgases. Bei dem Prozessgas kann es sich insbesondere um ein Prozessgas einer Vorrichtung zur additiven Herstellung dreidimensionaler Objekte handeln.

Dabei bedeutet "Filtern eines Prozessgases", dass das Prozessgas, welches mit Verunreinigungen, welche nicht gasförmig sind, gereinigt wird, indem diese Verunreinigungen zumindest teilweise abgetrennt werden. Prozessgas wird vor dem Filtern allgemein auch als "Rohgas" bezeichnet, während Prozessgas nach dem Filtern allgemein auch als "Reingas" bezeichnet wird.

Die Filtervorrichtung umfasst:
- eine Filterkammer,
- mindestens ein in der Filterkammer angeordnetes Filterelement, welches ausgebildet ist, das Prozessgas zu filtern, wobei ein Filterrückstand verbleibt,
- eine Fluidströmungserzeugungsvorrichtung, die dazu ausgebildet ist, eine Fluidströmung zu erzeugen, und
- eine Fördervorrichtung zum Fördern des Filterrückstands in der Fluidströmung, die derart ausgebildet und/oder angeordnet ist, dass der Filterrückstand zumindest teilweise der Filterkammer entnommen und in die Filterkammer zurück gefördert wird.

Erfindungsgemäß wird zumindest ein Teil des Filterrückstands der Filterkammer entnommen und mittels der Fluidströmung in die Filterkammer zurück gefördert. Diese Förderung kann auch als "interne Rückführung", "Abfallrückführung", "Rezirkulation" etc. bezeichnet werden.

In Form der erfindungsgemäßen Rezirkulation wird der Filterrückstand über eine bestimmte Förderstrecke, die im Wesentlichen der Länge der Förderleitung entspricht, gefördert, bevor der Filterrückstand wieder in die Filterkammer zurückkehrt.

Indem der Filterrückstand in der definierten Weise aus der Filterkammer heraus und anschließend wieder in die Filterkammer zurücktransportiert wird, kann beispielsweise eine besonders effektive Durchmischung des Filterrückstands und des Förderfluids möglich sein, d.h. eine möglichst intensive zumindest vorübergehende Vermengung des Filterrückstands und des Fluids, aus dem die Fluidströmung gebildet ist.

Die intensive Durchmischung kann beispielsweise dann besonders vorteilhaft sein, wenn die Fluidströmung einen Stoff umfasst, der mit dem Filterrückstand eine chemische Reaktion eintreten soll, um den Filterrückstand chemisch zu passivieren. Bei einem derartigen Stoff kann es sich beispielsweise um ein Oxidationsmittel zum zumindest teilweisen Oxidieren des Filterrückstands handeln. Beispielsweise kann als Oxidationsmittel Sauerstoff, der mit einem Inertgas vermischt die Fluidströmung (im konkreten Fall eine Gasströmung) bildet, dienen.

Unter einem inerten Stoff (z.B. inertes Fluid, Inertgas etc.) wird im Kontext der vorliegenden Erfindung ein Stoff verstanden, der bei den relevanten Bedingungen keine oder zumindest keine maßgebliche Reaktionen mit dem Filterrückstand eingeht. Beispielsweise können Stickstoff und/oder Argon als inertes Fluid (im konkreten Fall ein Inertgas) dienen.

Die intensive Durchmischung kann beispielsweise auch dann besonders vorteilhaft sein, wenn zusätzlich oder alternativ ein Feststoffpulver, beispielsweise Kalkpulver und/oder Siliciumdioxidpulver (Quarzpulver) und/oder Glaspulver als Inertisierungsmittel, verwendet wird, um die Brennbarkeit und/oder die Entflammbarkeit des Filterrückstands zu reduzieren. Glaspulver erweist sich in einigen Fällen deshalb als vorteilhaft, weil es bei niedrigeren Temperaturen schmilzt als beispielsweise Quarzpulver, sodass bereits bei relativ niedrigen Temperaturen eine zumindest teilweise Bedeckung der Filterrückstände mit Glasschmelze bzw. erstarrter Glasschmelze erreicht werden kann, was zu einer Senkung des Brandrisikos führen kann.

Durch die Rezirkulation kann der Filterrückstand beispielsweise mechanisch beansprucht werden, etwa indem die Teilchen des Filterrückstands aneinander und/oder gegen eine Wand und/oder gegen Teilchen eines Inertisierungsmittels stoßen. Infolgedessen kann es beispielsweise möglich sein, dass die Filterrückstandteilchen zumindest teilweise in kleinere Teilchen aufbrechen. Insbesondere lassen sich auf diese Weise beispielsweise Agglomerate aus relativ schwach aneinander gebundenen Primärteilchen aufbrechen. Insbesondere Inertisierungsmittel mit scharfkantigen Partikeln können dazu gut geeignet sein.

Nach einer nicht einschränkenden Theorie führen unter anderem Turbulenzen und/oder zerfallende Strömungswirbel und/oder Scherströmungen, die im Zuge der Rezirkulation auftreten können, zu einem Aufbrechen von Agglomeraten.

Im Vergleich zu einem Aufbau der Filtervorrichtung, bei der der Filterrückstand mittels eines Fluidstroms aus der Filterkammer in einen Abfallbehälter transportiert wird, kann sich als weiterer Vorteil der erfindungsgemäßen Vorrichtung der Vorteil ergeben, dass am Abfallbehälter kein zusätzliches Filter erforderlich ist.

Erfindungsgemäß wird der Filterrückstand zumindest teilweise der Filterkammer entnommen und in die Filterkammer zurück gefördert. Das heißt, dass zumindest ein Teil des Filterrückstands der Filterkammer entnommen und der entnommene Filterrückstand zumindest zum Teil mittels der Fluidströmung in die Filterkammer zurück gefördert wird. Dies umfasst den Fall, dass der Filterrückstand im Wesentlichen vollständig der Filterkammer entnommen und nur teilweise in die Filterkammer zurück gefördert wird. Ein restlicher Teil des Filterrückstands kann in einem separaten Auffangbehälter gesammelt werden, der zumindest während des Zeitraums der Rückförderung fluidisch mit der Filterkammer verbunden ist, wobei dies auch durch eine geöffnete Stellung eines Ventils oder einer Absperrvorrichtung zwischen Filterkammer und Auffangbehälter erzielbar ist. Bei dem in die Filterkammer zurück geförderten Teil des Filterrückstands kann es sich beispielsweise um einen Fein- oder Feinstanteil handeln, der durch das Filterelement aus dem Förderfluid und/oder aus dem vom Förderfluid verdrängten Prozessgas innerhalb der Filterkammer abgeschieden wird.

Insbesondere ist die Fördervorrichtung ausgebildet und/oder einstellbar bzw. steuerbar, einen ersten Anteil des Filterrückstands der Filterkammer zu entnehmen und einen zweiten Anteil des entnommenen ersten Anteils des Filterrückstands in die Filterkammer zurück zu fördern.

Bei dem ersten Anteil handelt es sich bevorzugt um mindestens 95, mehr bevorzugt mindestens 99 Masseprozent des anfallenden Filterrückstands.

Alternativ oder zusätzlich handelt es sich bei dem zweiten Anteil um bevorzugt mindestens 95, mehr bevorzugt mindestens 99 Masseprozent des ersten Anteils. Das heißt, dass der überwiegende Teil des der Filterkammer entnommenen Filterrückstands mittels der erfindungsgemäßen Rezirkulation in die Filterkammer zurück gefördert wird.

Alternativ dazu handelt es sich bei dem zweiten Anteil um höchstens 5, vorzugsweise höchstens 1 Masseprozent des ersten Anteils. Das heißt, dass nur ein geringer Teil des der Filterkammer entnommenen Filterrückstands in die Filterkammer zurück gefördert wird. Der überwiegende Teil wird insbesondere in einen Auffangbehälter gefördert.

Das Entnehmen und Zurückfördern des Filterrückstands kann dabei als ein durchgehender Transportvorgang durchgeführt werden. Das bedeutet, dass der Filterrückstand von dem Ort, an dem er die Filterkammer verlässt, an den Ort, an dem er in die Filterkammer zurückgelangt, gefördert wird, ohne an irgendeiner Stelle des Transportwegs angehalten und/oder in einen Zwischenspeicher gefördert zu werden. Alternativ ist es möglich, dass der Transport des Filterrückstands von der Entnahme aus der Filterkammer bis zum Wiedereintritt in dieselbe unterbrochen wird, beispielsweise durch zwischenzeitliche Förderung in einen Zwischenspeicher. In dem Zwischenspeicher kann der Filterrückstand beispielsweise einem zwischengeschalteten Behandlungsschritt unterzogen werden. Bei dem zwischengeschalteten Behandlungsschritt kann es sich beispielsweise um einen chemischen Reaktionsschritt handeln. Zudem ist es möglich, dass das Entnehmen und Zurückfördern eines Teils des Filterrückstands als durchgehender Transportvorgang und eines anderen Teils des Filterrückstands mit einem zwischengeschalteten Behandlungsschritt durchgeführt wird.

Bevorzugt umfasst die Filtervorrichtung einen an die Filterkammer direkt oder indirekt angekoppelten oder direkt oder indirekt ankoppelbaren Abfallbehälter. In diesem Zusammenhang wird von einem "indirekten Ankoppeln" gesprochen, wenn zwischen Filterkammer und Abfallbehälter eine Zwischenkammer, eine Verbindungsleitung o.ä. vorgesehen ist. Eine Zwischenkammer ist eine Kammer, die zwischen der Filterkammer und dem Abfallbehälter angeordnet ist, sodass beispielsweise Filterrückstand durch die Zwischenkammer hindurchtreten muss, um von der Filterkammer in den Abfallbehälter zu gelangen. Ein "direktes Ankoppeln" liegt umgekehrt vor, wenn eine derartige Zwischenkammer fehlt. Dabei ist es insbesondere bevorzugt, dass ein Innenraum eines solchen Abfallbehälters, der an die Filterkammer direkt oder indirekt angekoppelt ist, durch eine erste Absperrvorrichtung fluiddicht abtrennbar ist. Dadurch kann es beispielsweise möglich sein, die Filtervorrichtung so einzustellen, dass wahlweise Filterrückstand aus der Filterkammer in den Abfallbehälter gelangen kann oder dass dieser Durchgang gesperrt ist. Dabei ist der optionale Abfallbehälter mehr bevorzugt an die Filterkammer lösbar angekoppelt oder ankoppelbar. Das heißt, ein an die Filterkammer gekoppelter Abfallbehälter kann von der Filterkammer wieder getrennt werden.

Bevorzugt weist die Filterkammer einen ersten Sammelbereich zum Sammeln von Filterrückstand, der vom mindestens einen Filterelement abgelöst ist, einen zweiten Sammelbereich und eine Fördervorrichtung auf. Die Fördervorrichtung ist ausgebildet, den abgelösten Filterrückstand zumindest teilweise vom ersten Sammelbereich in den zweiten Sammelbereich zu fördern. Im vorstehenden Satz bedeutet "zumindest teilweise" dass der in den ersten Sammelbereich gelangende Filterrückstand entweder vollständig oder nur zum Teil in den zweiten Sammelbereich gefördert wird. Der zweite Sammelbereich ist vom ersten Sammelbereich zumindest bereichsweise räumlich getrennt. Eine vollständige räumliche Trennung liegt dabei dann vor, wenn die Sammelbereiche abgesehen von der Fördervorrichtung keine für ein Fluid oder für Feststoffe durchgängige Verbindung aufweisen. Eine bereichsweise räumliche Trennung liegt dann vor, wenn die Trennung unvollständig ist und zumindest eine Öffnung vorliegt, durch welche ein Fluid und/oder Feststoffe direkt von dem einen Bereich in den anderen Bereich gelangen können, ohne dass diese den Weg über die Fördervorrichtung nehmen müssen. Durch das Vorhandensein der beiden Sammelbereiche können beispielsweise ein definierter Ausgangsort (erster Sammelbereich) und ein definierter Zielort (zweiter Sammelbereich) für die erfindungsgemäße interne Rückführung vorliegen. Dadurch kann die interne Rückführung mittels der Fördervorrichtung beispielsweise in definierter Weise durchgeführt und der danach im zweiten Sammelbereich vorliegende Filterrückstand abtransportiert oder einer sonstigen weiteren Behandlung zugeführt werden.

Bevorzugt besteht zwischen dem zweiten Sammelbereich und dem ersten Sammelbereich oder zwischen dem ersten Sammelbereich und dem Inneren der Filterkammer im Bereich des mindestens einen Filterelements eine Fluidverbindung. Dadurch kann beispielsweise Förderfluid die Filtervorrichtung durch das mindestens eine Filterelement, welches zum Filtern des Prozessgases bestimmt ist, verlassen. Auf diese Weise kann beispielsweise auf ein zusätzliches Filter zum Filtern des aus der Filtervorrichtung austretenden Förderfluids verzichtet werden. Außerdem kann beispielsweise in Fällen, in denen das Förderfluid mit einem gegenüber dem Filterrückstand reaktiven Passivierungsmittel versetzt ist, Passivierungsmittel auf das mindestens eine Filterelement treffen, sodass dort befindlicher Filterrückstand zumindest teilweise mit dem Passivierungsmittel chemisch reagiert und sich die Gefahr eines Filterbrandes reduzieren oder gänzlich eliminieren lässt.

Weiter bevorzugt sind der erste Sammelbereich und der zweite Sammelbereich in einer Betriebsposition der Filtervorrichtung unterhalb des mindestens einen Filterelements angeordnet. Ferner weist zumindest der erste Sammelbereich eine Öffnung nach oben hin auf. Durch eine "Öffnung nach oben hin" ist beispielsweise der erste Sammelbereich nach oben hin zumindest teilweise geöffnet ist. Die Filtervorrichtung befindet sich dann in einer Betriebsposition, wenn sie so angeordnet ist, dass sie zum Filtern eines Prozessgases eingesetzt werden kann. Durch die Anordnung der Sammelbereiche unterhalb des mindestens einen Filterelements kann beispielsweise die Schwerkraft dazu genutzt werden, um vom Filterelement abgelösten Filterrückstand in den ersten Sammelbereich gelangen zu lassen, wobei der Filterrückstand durch die genannte Öffnung in den ersten Sammelbereich eintreten kann.

Bevorzugt ist der zweite Sammelbereich zumindest teilweise unterhalb des ersten Sammelbereichs angeordnet. Dadurch kann beispielsweise eine besonders platzsparende Anordnung der Sammelbereiche ermöglicht werden. Ferner kann dadurch beispielsweise ermöglicht werden, dass der Filterrückstand an der Unterseite der Filtervorrichtung aus dem zweiten Sammelbereich entnommen wird, beispielsweise um ihn zu entsorgen, wobei insbesondere bei einer Anordnung beider Sammelbereiche unterhalb des mindestens einen Filterelements ein Filterrückstandausgang an der Unterseite der Filtervorrichtung einfacher zugänglich sein kann als ein Filterrückstandausgang an anderer Stelle der Filtervorrichtung.

Bevorzugt grenzt eine Trennwand den zweiten Sammelbereich von einem Inneren der Filterkammer zumindest bereichsweise ab, wobei weiter bevorzugt die Trennwand zwischen dem ersten Sammelbereich und dem zweiten Sammelbereich angeordnet ist. Durch eine derartige Trennwand können beispielsweise die Sammelbereiche definiert werden.

Weiter bevorzugt ist die Trennwand derart in der Filterkammer angeordnet, dass der in den zweiten Sammelbereich geförderte Filterrückstand zumindest teilweise an der Trennwand aufprallt. Das heißt, dass Filterrückstand mittels der Fördervorrichtung so aus dem ersten Sammelbereich in den zweiten Sammelbereich gefördert wird, dass der Filterrückstand mit einem bestimmten Impuls auf die Trennwand trifft und zumindest einen Teil des Impulses an die Trennwand abgibt. Dadurch kann es beispielsweise möglich sein, dass durch die beim Aufprall wirkenden Kräfte zu einem Aufbrechen der Partikel des Filterrückstandes führen. Zudem können die Partikel des Filterrückstands beispielsweise durch die Trennwand abbremsen, sodass sie sich von der Fluidströmung, die aus dem zweiten Sammelbereich entweicht, trennen.

Als "Aufprallbereich" des Filterrückstands wird ein Bereich der Trennwand bezeichnet, in dem Filterrückstand auftrifft, wenn er aus dem ersten Sammelbereich in den zweiten Sammelbereich gefördert wird.

Die Trennwand kann beispielsweise so geformt sein, dass sie im Aufprallbereich ebenmäßig ist. Im einfachsten Fall handelt es sich bei der Trennwand um eine ebene Wand, beispielsweise ein ebenes Blech.

Als "Aufprallrichtung" des Filterrückstands wird die Richtung bezeichnet, in der der Filterrückstand auf die Trennwand auftrifft.

Zwischen einer Richtung und einer Fläche können allgemein mehrere Winkel gemessen werden. Beispielsweise können zwischen einer Richtung und einer ebenen Fläche zwei supplementäre Winkel α und α' gemessen werden, die sich auf 180° ergänzen (α + α' = 180°). Um eine eindeutige Bezugsgröße festzulegen, wird im Kontext der vorliegenden Erfindung als Aufprallwinkel derjenige Winkel verstanden, der in einer Betriebsposition der Filtervorrichtung von der Aufprallrichtung nach oben hin zur Trennwand gemessen wird. Das heißt beispielsweise dass im Fall eines ebenen und senkrecht angeordneten Aufprallbereichs bei einem Aufprall von schräg oben ein spitzer Aufprallwinkel (< 90°) vorliegt.

Weiter bevorzugt ist die Trennwand so ausgebildet und/oder zumindest im Aufprallbereich des Filterrückstands so angeordnet, dass der Filterrückstand in einer Aufprallrichtung mit einem Aufprallwinkel von mindestens 30°, mehr bevorzugt mindestens 45°,noch mehr bevorzugt mindestens 60°, besonders bevorzugt mindestens 75° und/oder höchstens 90° aufprallt. Dadurch kann beispielsweise das Aufbrechen der Partikel beim Aufprall besonders effektiv sein, insbesondere in dem Sinn, dass besonders viele Partikel aufgebrochen und/oder die Partikel in besonders kleine Teile zerteilt werden.

Alternativ oder zusätzlich ist es bevorzugt, dass die Trennwand zumindest in einem Bereich, in dem der Filterrückstand aufprallt, gekrümmt ist, wobei die Krümmung beispielswese eine zylindrische, konische oder schneckenförmige Krümmung ist. Durch die Krümmung kann beispielsweise die Bewegung des Filterrückstands in vorteilhafter Weise geführt werden. Beispielsweise kann der Filterrückstand so geführt werden, dass er möglichst vollständig im zweiten Sammelbereich verbleibt, selbst wenn der zweite Sammelbereich eine nach oben hin offene Öffnung aufweist, durch die der zweite Sammelbereich mit dem ersten Sammelbereich kommuniziert. Beispielsweise kann der Filterrückstand durch eine entsprechende Formung und Anordnung der Trennwand auch so geführt werden, dass er sich nach dem Aufprall bevorzugt in Richtung eines Filterrückstandausgangs bewegt. In anderen Worten kann der Filterrückstand durch eine entsprechende Formung und Anordnung der Trennwand zumindest teilweise im zweiten Sammelbereich eingefangen werden.

Bevorzugt ist die Trennwand so ausgebildet und so in der Filterkammer angeordnet, dass eine Fluidverbindung zwischen dem zweiten Sammelbereich und dem ersten Sammelbereich und/oder dem mindestens einen Filterelement besteht. Weiter bevorzugt wird die Fluidverbindung durch eine in Betriebsposition der Filtervorrichtung in einem oberen Bereich angeordnete Öffnung des zweiten Sammelbereichs bereitgestellt. Durch eine derartige Fluidverbindung kann beispielsweise ein Druckausgleich sattfinden, sodass sich durch die Fluidströmung der Fördervorrichtung im zweiten Sammelbereich kein unerwünschter Überdruck aufbaut. Dabei kann beispielsweise eine Öffnung des zweiten Sammelbereichs eine effektive Art und Weise sein, diese Fluidverbindung zu ermöglichen.

Bevorzugt ist ein Bereich der Filterkammer nach unten hin verjüngt ausgebildet und die Trennwand so im verjüngten unteren Bereich der Filterkammer und unterhalb des mindestens einen Filterelements angeordnet, dass sowohl der erste Sammelbereich als auch der zweite Sammelbereich jeweils einen nach unten verjüngten und in eine Öffnung mündenden unteren Bereich aufweisen. Insbesondere bevorzugt ist dabei, wenn die nach unten verjüngten Bereiche trichterförmig ausgebildet sind. Durch einen nach unten verjüngten Bereich der ersten und/oder der zweiten Sammelkammer kann beispielsweise der Filterrückstand in der jeweiligen Sammelkammer effektiv gesammelt und für die Entnahme bereitgehalten werden.

Die Bezeichnungen "unten" und "nach unten hin" beziehen sich dabei auf die Betriebsposition der Filtervorrichtung.

Der nach unten verjüngte untere Bereich des ersten Sammelbereichs wird insbesondere bevorzugt von einer Wandung gebildet, die in einer Betriebsposition der Filtervorrichtung zumindest abschnittsweise eine Neigung zur Senkrechten von 5° bis 45°, mehr bevorzugt von 10° bis 35°, noch mehr bevorzugt 15° bis 25° aufweist.

Der nach unten verjüngte untere Bereich des ersten Sammelbereichs wird insbesondere bevorzugt von einer Wandung gebildet, die in einer Betriebsposition der Filtervorrichtung zumindest abschnittsweise eine Neigung zur Senkrechten von 5° bis 45°, mehr bevorzugt von 10° bis 35°, noch mehr bevorzugt 15° bis 25° aufweist.

Eine derartige Neigung der Wandung bzw. eines Abschnitts der Wandung kann beispielsweise dazu führen, dass der Filterrückstand im jeweiligen Sammelbereich nicht auf der Wandung liegen bleibt, sondern der Wandung entlang nach unten rutscht.

Bevorzugt ist die Trennwand derart in der Filterkammer angeordnet, dass der in den zweiten Sammelbereich geförderte Filterrückstand zumindest teilweise von ihr im zweiten Sammelbereich zurückgehalten wird. Dadurch kann beispielsweise verhindert werden, dass sich der Filterrückstand erneut am mindestens einen Filterelement anlagert und dessen Kapazität belastet.

Bevorzugt ist die Trennwand zumindest in einem Auftreffbereich des Filterrückstands so angeordnet, dass der Filterrückstand in einer Auftreffrichtung mit einem Auftreffwinkel α von höchstens 90°, bevorzugt höchstens 45°, weiter bevorzugt höchstens 20°, besonders bevorzugt höchstens 10° auftrifft, wobei der Auftreffwinkel α in einer Betriebsposition der Filtervorrichtung von der Auftreffrichtung nach oben hin zur Trennwand gemessen wird. Dadurch kann beispielsweise ein harter Aufprall der Fluidströmung und/oder der Partikel auf der Trennwand vermieden und in der Folge eine Verwirbelung des Filterrückstands verringert oder vermieden werden. Zudem kann der Filterrückstand beispielsweise effektiv von der Trennwand an den gewünschten Ort, insbesondere in Richtung des Ausgangs des zweiten Sammelbereichs geführt werden.

Mit einer gekrümmten Trennwand kann das Auftreffen der Fluidströmung bzw. der Partikel in vielen Fällen besonders sanft erfolgen, weil sich durch eine Trennwand mit geeigneter Krümmung häufig besonders flache Auftreffwinkel ermöglichen lassen.

Vorstehend sind zwei Strategien beschrieben: Gemäß der ersten Strategie soll das Auftreffen der Fluidströmung und der Partikel besonders hart sein, sodass allfällige Agglomerate möglichst aufgebrochen werden. Gemäß der zweiten Strategie soll das Auftreffen der Fluidströmung und der Partikel besonders sanft erfolgen, um Verwirbelungen zu vermeiden und den Filterrückstand weiter in den zweiten Sammelbereich hinein zu führen und dort zu halten.

In der Praxis kann beispielsweise ein Kompromiss zwischen den beiden Strategien erforderlich sein, wenn beide beschriebenen Effekte gewünscht sind. In Situationen, in denen keine Agglomerate auftreten oder in denen auftretende Agglomerate bereits auf andere Weise (beispielsweise mittels einer Düse oder Querschnittsverengung) aufgebrochen worden sind, kann beispielsweise ein möglichst sanftes Auftreffen optimal sein. In wieder anderen Situationen, in denen Agglomerate in der zweiten Sammelkammer aufgebrochen werden müssen, um in dieser oder stromabwärts von dieser eine ausreichende Passivierung zu erreichen, kann es erforderlich sein, durch die Ausrichtung der Strömungsrichtung an der Reinjektionsstelle, durch die Orientierung und Formung der Trennwand, durch den Abstand zwischen Reinjektionsstelle und Trennwand etc. für einen möglichst harten Aufprall zu sorgen.

Bei einer weiteren erfindungsgemäßen Filtervorrichtung handelt es sich um eine Filtervorrichtung zum Filtern eines Prozessgases, insbesondere eines Prozessgases einer Vorrichtung zur additiven Herstellung dreidimensionaler Objekte. Die Filtervorrichtung umfasst eine Filterkammer. Die Filtervorrichtung umfasst ferner mindestens ein in der Filterkammer angeordnetes Filterelement, welches ausgebildet ist, das Prozessgas zu filtern, wobei ein Filterrückstand verbleibt. Die Filtervorrichtung umfasst ferner einen lösbar über an die Filterkammer angekoppelten oder lösbar an die Filterkammer ankoppelbaren Auffangbehälter, wobei bevorzugt ein Innenraum des an die Filterkammer lösbar angekoppelten Auffangbehälters von einem Innenraum der Filterkammer durch eine erste Absperrvorrichtung fluiddicht abtrennbar ist. Die lösbare Kopplung kann eine direkte oder eine indirekte Kopplung sein. Die Filtervorrichtung umfasst ferner eine Fluidströmungserzeugungsvorrichtung, die dazu ausgebildet ist, eine Fluidströmung zu erzeugen. Die Filtervorrichtung umfasst ferner eine Fördervorrichtung zum Fördern des Filterrückstands in der Fluidströmung, wobei die Fördervorrichtung derart ausgebildet und/oder angeordnet ist, dass der Filterrückstand zumindest teilweise der Filterkammer entnommen und in den Auffangbehälter gefördert wird und dass während des Förderns des Filterrückstands in der Fluidströmung Fluid vom Auffangbehälter in die Filterkammer zurück strömt.

Beim Betrieb einer derartigen Filtervorrichtung kann der Filterrückstand beispielsweise ohne Zwischenschritt in einem Behälter gelangen, was wiederum beispielsweise die Entsorgung des Filterrückstands vereinfachen kann.

Wie bereits für die weiter oben beschriebene Filtervorrichtung, bei der eine Rezirkulation stattfindet, dargestellt, kann der Filterrückstand beispielsweise besonders effektiv mit dem Förderfluid durchmischt werden. Dadurch kann wie im Fall der Rezirkulation beispielswese die Passivierung durch chemische Reaktion mit einem Passivierungsmittel verbessert werden. Dadurch kann beispielsweise ferner wie im Fall der Rezirkulation die Inertisierung mittels eines Filterhilfsstoffs verbessert werden. Dadurch können beispielsweise ferner wie im Fall der Rezirkulation die Filterrückstandteilchen zumindest teilweise in kleinere Teilchen aufgebrochen werden.

Wie bereits für die weiter oben beschriebene Filtervorrichtung, bei der eine Rezirkulation stattfindet, dargestellt, kann auch im Fall der Förderung in einen Auffangbehälter beispielsweise auf ein zusätzliches Filterelement verzichtet werden, weil erfindungsgemäß das Fluid in die Filterkammer zurück strömt.

Das Strömen von Fluid vom Auffangbehälter zurück in die Filterkammer erfolgt dabei bevorzugt durch einen Druckausgleich. In diesem Fall ist keine zusätzliche Fördervorrichtung erforderlich, um das Fluid vom Auffangbehälter zurück in die Filterkammer strömen zu lassen.

Bevorzugt weist die Filterkammer einen ersten Sammelbereich zum Sammeln von vom mindestens einen Filterelement abgelösten Filterrückstand und einen vom ersten Sammelbereich zumindest bereichsweise räumlich getrennten zweiten Sammelbereich auf, wobei das in die Filterkammer zurückströmende Fluid über den zweiten Sammelbereich in die Filterkammer eintritt. Durch das Vorhandensein der beiden Sammelbereiche kann beispielsweise die Menge an Filterrückstand, der ungewollt mit der Fluidströmung aus dem Auffangbehälter in die Filterkammer gelangt und sich dort erneut am mindestens einen Filterelement absetzt, verringert werden.

Weiter bevorzugt sind der erste Sammelbereich und der zweite Sammelbereich in einer Betriebsposition der Filtervorrichtung unterhalb des mindestens einen Filterelements angeordnet, wobei zumindest der erste Sammelbereich eine Öffnung nach oben hin aufweist. Durch die Anordnung der Sammelbereiche unterhalb des mindestens einen Filterelements kann beispielsweise die Schwerkraft dazu genutzt werden, um vom Filterelement abgelösten Filterrückstand in den ersten Sammelbereich gelangen zu lassen, wobei der Filterrückstand durch die genannte Öffnung in den ersten Sammelbereich eintreten kann.

Weiter bevorzugt ist der zweite Sammelbereich zumindest teilweise unterhalb des ersten Sammelbereichs angeordnet. Dadurch kann beispielsweise eine besonders platzsparende Anordnung der Sammelbereiche ermöglicht werden.

Bevorzugt grenzt eine Trennwand den zweiten Sammelbereich von einem Inneren der Filterkammer zumindest bereichsweise ab, wobei bevorzugt die Trennwand zwischen dem ersten Sammelbereich und dem zweiten Sammelbereich angeordnet ist. Durch eine derartige Trennwand können beispielsweise die Sammelbereiche definiert werden.

Bevorzugt ist die Trennwand derart in der Filterkammer angeordnet, dass von dem aus dem Auffangbehälter in den zweiten Sammelbereich strömenden Fluid mitgeführter Filterrückstand zumindest teilweise von ihr im zweiten Sammelbereich zurückgehalten wird. Dadurch kann beispielsweise die Menge an Filterrückstand, der ungewollt mit der Fluidströmung aus dem Auffangbehälter in die Filterkammer gelangt und sich dort erneut am mindestens einen Filterelement absetzt, verringert werden.

Bevorzugt ist die Trennwand bevorzugt zumindest in einem Auftreffbereich des Filterrückstands so angeordnet, dass der Filterrückstand in einer Auftreffrichtung mit einem Auftreffwinkel von mindestens 30°, noch mehr bevorzugt mindestens 45°, besonders bevorzugt mindestens 60°, auftrifft, wobei der Auftreffwinkel in einer Betriebsposition der Filtervorrichtung von der Auftreffrichtung nach oben hin zur Trennwand gemessen wird. Dadurch können beispielsweise ein hartes Aufprallen im Sinne einer starken Ablenkung infolge des Aufprallens der Fluidströmung und des Filterrückstands und gegebenenfalls ein Aufbrechen von Agglomeraten erfolgen.

Alternativ ist die Trennwand bevorzugt zumindest in einem Auftreffbereich des Filterrückstands so angeordnet, dass der Filterrückstand in einer Auftreffrichtung mit einem Auftreffwinkel von höchstens 45°, noch mehr bevorzugt höchstens 20°, besonders bevorzugt höchstens 10°, auftrifft. Dadurch kann beispielsweise ein sanftes Auftreffen der Fluidströmung und des Filterrückstands im Sinne einer geringen Ablenkung infolge des Aufprallens erfolgen.

Alternativ oder zusätzlich kann die Trennwand zumindest in einem Bereich, in dem der Filterrückstand auftrifft, gekrümmt sein.

Bevorzugt weist der Auffangbehälter eine gekrümmte Seitenwand auf, wobei die Fördervorrichtung ausgebildet und/oder angeordnet ist, die Fluidströmung in einer Richtung in den Auffangbehälter eintreten und auf die innere Seitenwand auftreffen zu lassen, die von einer in Betriebsposition der Filtervorrichtung horizontalen, bezüglich der inneren Seitenfläche tangentialen Richtung um maximal 30°, mehr bevorzugt maximal 20°, noch mehr bevorzugt maximal 10° abweicht. Insbesondere weist der Auffangbehälter dabei eine im Wesentlichen zylindrische Gestalt auf. Dadurch können beispielsweise Verwirbelungen im Auffangbehälter und damit beispielsweise die Menge an Filterrückstand, der vom in die Filterkammer zurückströmenden Fluid mitgerissen wird, verringert werden. Ferner kann dadurch der Filterrückstand beispielsweise ähnlich wie in einem Zyklonabscheider effektiv aus der Fluidströmung abgeschieden werden.

Alternativ oder zusätzlich ist die Fördervorrichtung ausgebildet und/oder angeordnet, die Fluidströmung in einer Richtung in den Auffangbehälter eintreten zu lassen, die in einer Betriebsposition der Filtervorrichtung von der Horizontalen um maximal 45°, bevorzugt maximal 30°, mehr bevorzugt maximal 15° abweicht. Dadurch können beispielsweise Verwirbelungen im Auffangbehälter und damit beispielsweise die Menge an Filterrückstand, der vom in die Filterkammer zurückströmenden Fluid mitgerissen wird, verringert werden.

Bevorzugt weist die Fördervorrichtung einen Austrittsbereich auf, der mit dem ersten Sammelbereich verbunden ist. Optional kann der Austrittsbereich durch eine zweite Absperrvorrichtung wie beispielsweise eine Absperrklappe vom ersten Sammelbereich abtrennbar sein. Das heißt, dass die optionale Absperrklappe im geschlossenen Zustand verhindert, dass Filterrückstand aus dem ersten Sammelbereich in den Austrittsbereich gelangt.

Der beschriebene Bereich wird deshalb als "Austrittsbereich" bezeichnet, weil es sich um den Bereich der Fördervorrichtung handelt, in welchen der aus dem ersten Sammelbereich austretender Filterrückstand zunächst gelangt, bevor er weiter durch die Förderleitung gefördert wird.

Bevorzugt weist der Austrittsbereich eine Förderfluidzuführung und einen Förderfluidausgang auf, wobei der Förderfluidausgang durch eine Förderleitung mit dem zweiten Sammelbereich verbunden ist. Auf diese Weise kann beispielsweise eine Fluidströmung, die aus einem durch die Förderfluidzuführung dem Austrittsbereich zugeführten Förderfluid gebildet wird, den Filterrückstand aus dem ersten Sammelbereich in den zweiten Sammelbereich fördern.

Beispielsweise kann der Austrittsbereich zu diesem Zweck als Ejektor bzw. als Teil eines Ejektors ausgebildet sein. Als Ejektor wird insbesondere eine Strahlpumpe bezeichnet, in der die Pumpwirkung durch die Strömung des Förderfluids (auch als "Treibmedium" bezeichnet) erzeugt wird, sodass ein anderes Medium (auch als "Saugmedium" bezeichnet) angesaugt und gefördert wird. Der Filterrückstand ist dabei im Saugmedium umfasst bzw. wird gemeinsam mit dem Saugmedium in Form eines Fluids aus dem ersten Sammelbereich angesaugt. Im Austrittsbereich kommt es bevorzugt zu einer Durchmischung der Medien, sodass ein entsprechendes Gemisch durch die Förderleitung gefördert wird.

Die vorliegende Erfindung ist jedoch nicht auf die Verwendung eines Ejektors beschränkt, was die nachfolgende Beschreibung von Ausführungsbeispielen ohne Ejektor verdeutlichen wird. In diesen Ausführungsbeispielen ist es beispielsweise möglich, dass der Filterrückstand durch Einwirkung der Schwerkraft in den Austrittsbereich gelangt und dort von einer Fluidströmung erfasst und weitertransportiert wird, wobei die Fluidströmung beispielsweise von einem Gebläse erzeugt wird.

Die Verwendung eines Ejektors hat sich in vielen Fällen als vorteilhaft erwiesen, beispielsweise weil im Ejektor oder stromabwärts des Ejektors ein effektives Aufbrechen von Filterrückstandteilchen erfolgen kann, ohne dass dazu eine gesonderte Vorrichtung wie eine Querschnittsverengung in der Förderleitung erforderlich ist.

Unabhängig davon, ob ein Ejektor verwendet wird oder nicht, ist die Förderleitung bevorzugt als eine starre Leitung ausgeführt, mehr bevorzugt als ein Metallrohr, insbesondere als ein Stahlrohr. Beispielsweise kann eine starre Leitung, insbesondere eine starre Leitung aus einem metallischen Werkstoff wie beispielsweise ein Metallrohr, ausreichende Stabilität bereitstellen. Beispielsweise kann ein Metallrohr ausreichend druckfest sein.

Bevorzugt ist die Förderleitung thermisch isoliert. Beispielsweise können dadurch der Filterrückstand und das Fluid in der Förderleitung auf erhöhter Temperatur gehalten werden, was beispielsweise dann wünschenswert sein kann, wenn der Filterrückstand mit dem Fluid chemisch reagieren soll, weil eine erhöhte Temperatur zu einer Beschleunigung der chemischen Reaktion (z.B. Oxidation mit im Fluid enthaltenem Sauerstoff) führen kann.

Bevorzugt weist die Förderleitung zumindest in einem Bereich, insbesondere entlang der gesamten Länge, einen Innendurchmesser von mindestens 2 mm, mehr bevorzugt mindestens 10 mm, noch mehr bevorzugt mindestens 15 mm und besonders bevorzugt mindestens 20 mm auf und/oder von höchstens 50 mm, mehr bevorzugt von höchstens 40 mm, noch mehr bevorzugt von höchstens 35 mm, besonders bevorzugt von höchstens 30 mm auf. Dabei gilt im Fall eines nicht kreisförmigen Querschnitts der Durchmesser eines flächengleichen kreisförmigen Querschnitts als Innendurchmesser.

Im einfachsten Fall handelt es sich bei der Förderleitung um eine Leitung mit einem über die gesamte Länge konstanten Durchmesser. In diesem Fall gelten die vorstehenden bevorzugten Maße für den Durchmesser entlang der gesamten Länge.

Mit den genannten bevorzugten Durchmessern kann beispielsweise das Brandschutzverhalten und/oder das Explosionsschutzverhalten der Filtervorrichtung verbessert werden, da die Gefahr, dass sich ein unbeabsichtigter Brand oder eine unbeabsichtigte Explosion aus einem Bereich der Filtervorrichtung durch die Förderleitung in einen anderen Bereich der Filtervorrichtung fortpflanzt, verringert wird, wobei die Förderleitung gleichzeitig einen für eine effektive Förderung ausreichenden Durchmesser aufweist. Auf diese Weise kann beispielsweise verhindert werden, dass ein unbeabsichtigter Filterbrand durch die Förderleitung durchschlägt und weitere Bereiche der Filtervorrichtung erfasst. Das dahinterliegende Prinzip ähnelt dem Prinzip der Grenzspaltweite.

Bei der Grenzspaltweite (MESG) für ein bestimmtes Gasgemisch handelt es sich um ein Maß, dass in einem normierten Verfahren (internationaler Standard IEC (International Electrotechnical Commission) 60079-1) bestimmt wird. Ermittelt wird dabei, welche maximale Breite ein 25 mm langer Spalt in einem Behälter des Gases aufweisen darf, damit ein Hinauszünden noch verhindert wird (EN (Europäische Norm) 60079-20-1). Dieses Maß ist auf die vorliegende Erfindung nicht unmittelbar anwendbar. Einerseits entspricht die normgemäße Geometrie eines 25 mm langen Spalts nicht der typischen Geometrie des Querschnitts der Förderleitung. Andererseits sind die Brand- und Zündeigenschaften des durch die Förderleitung geförderten Fluids von der Zusammensetzung des Förderfluids und vor allem von der Beschaffenheit (chemische Zusammensetzung, Oberfläche, Partikelgröße etc.) und der Konzentration des vom Förderfluid geförderten Filterrückstands abhängig. Das dem Maß der Grenzspaltweite zugrundeliegende Prinzip ist jedoch auf die vorliegende Erfindung anwendbar. Es besagt, dass ein relativ kleiner Querschnitt einer Leitung das Hinauszünden aus der Leitung, das Hineinzünden in die Leitung und das Hindurchzünden durch die Leitung erschwert oder gänzlich verunmöglicht.

Bevorzugt beträgt das Verhältnis zwischen der Länge der Förderleitung und dem über die Länge der Förderleitung gemittelten Innendurchmesser der Förderleitung mindestens 50:1, bevorzugt mindestens 75:1, mehr bevorzugt mindestens 100:1, wobei im Fall eines nicht kreisförmigen Querschnitts der Durchmesser eines flächengleichen kreisförmigen Querschnitts als Innendurchmesser gilt. Dadurch kann beispielsweise eine Förderleitung bereitgestellt werden, die einer ausreichend langen Förderstrecke entspricht und mit der das oben beschriebene vorteilhafte Brandschutzverhalten und/oder Explosionsschutzverhalten realisierbar ist.

Bevorzugt umfasst die Förderfluidzuführung eine Düse, die so ausgebildet und/oder angeordnet ist, dass die durch die Düse geleitete Fluidströmung derart beschleunigt wird, dass im Mischbereich ein Ansaugdruck erzeugt wird zum Fördern des Filterrückstands aus dem ersten Sammelbereich und optional eines im ersten Sammelbereich befindlichen Fluids in den Austrittsbereich erzeugt wird, wobei die Düse mehr bevorzugt als Ejektordüse oder Venturidüse ausgebildet ist. Durch einen derartigen Ansaugdruck kann beispielsweise ein effektives Fördern des Filterrückstands aus der Filterkammer heraus, durch die Förderleitung und in die Filterkammer zurück erfolgen.

Feststoffe, insbesondere partikelförmige Feststoffe können grundsätzlich mit Unterdruck oder Überdruck pneumatisch gefördert werden. Dabei wird häufig unterschieden zwischen:
1. Flugförderung (insbesondere bei Strömungsgeschwindigkeiten von > 20 m/s und mit Feststoffbeladungen von < 15 kg Feststoff zu kg Gas)
2. Strähnenförderung (insbesondere bei Strömungsgeschwindigkeiten von 15-20 m/s und mit Feststoffbeladungen von 20-40 kg Feststoff zu kg Gas)
3. Pfropfenförderung (insbesondere bei Strömungsgeschwindigkeiten von 3-10 m/s und mit Feststoffbeladungen von >40 kg Feststoff zu kg Gas)

Bevorzugt handelt es sich bei der Fördervorrichtung um eine Fördervorrichtung zum Fördern des Filterrückstands in die Filterkammer zurück und/oder in den Auffangbehälter mittels Flugförderung oder Strähnenförderung oder im Grenzbereich dazwischen. Dadurch kann beispielsweise eine gute Durchmischung von Filterrückstand und Fluid erreicht werden.

Bevorzugt ist die Fördervorrichtung so ausgebildet oder einstellbar bzw. steuerbar, dass die Durchflussrate (Fluidverbrauch) des Fluids im Fluidstrom mindestens 30 L/min, mehr bevorzugt mindestens 50 L/min, noch mehr bevorzugt mindestens 60 L/min und/oder höchstens 300 L/min, mehr bevorzugt höchstens 200 L/min, noch mehr bevorzugt höchstens 100 L/min beträgt. Alternativ oder zusätzlich ist die Fördervorrichtung so ausgebildet oder einstellbar bzw. steuerbar, dass die Feststoffbeladung bevorzugt mindestens 3 kg, mehr bevorzugt mindestens 10 kg, noch mehr bevorzugt mindestens 20 kg Filterrückstand pro kg Fluid (insbesondere Gas) und/oder höchstens 50 kg, mehr bevorzugt höchstens 40 kg, noch mehr bevorzugt höchstens 30 kg Filterrückstand pro kg Fluid (insbesondere Gas) beträgt. Alternativ oder zusätzlich ist die Fördervorrichtung so ausgebildet oder einstellbar bzw. steuerbar, dass die Strömungsgeschwindigkeit bevorzugt mindestens 3 m/s, mehr bevorzugt mindestens 5 m/s, noch mehr bevorzugt mindestens 10 m/s und/oder höchstens 30 m/s, mehr bevorzugt höchstens 25 m/s, noch mehr bevorzugt höchstens 20 m/s beträgt. Mit derartigen Werten für die Durchflussrate, die Feststoffbeladung und die Strömungsgeschwindigkeit ist häufig ein guter Kompromiss zwischen den Kosten für den Betrieb der Filtervorrichtung, insbesondere den Kosten für das Fluid, und der Leistungsfähigkeit der Fördervorrichtung möglich.

Bevorzugt umfasst die Förderleitung mindestens eine lokal begrenzte Querschnittsverengung, wobei mehr bevorzugt eine Innenquerschnittsfläche der Förderleitung im Bereich der Querschnittsverengung um mindestens 25%, noch mehr bevorzugt mindestens 50%, besonders bevorzugt mindestens 75% gegenüber einer Innenquerschnittsfläche stromaufwärts der Querschnittsverengung vermindert ist. Durch eine derartige Querschnittverengung kann es beispielsweise zu einer lokalen Beschleunigung der Fluidströmung und dadurch zu einer Erhöhung der mechanischen Beanspruchung des Filterrückstands im Zuge der Rezirkulation kommen. Infolgedessen kann beispielsweise das Aufbrechen von Filterrückstandteilchen in kleinere Teilchen verstärkt werden.

Bevorzugt ist eine derartige Querschnittsverengung im Bereich des Förderfluidausgangs angeordnet. Dadurch kann beispielsweise in Fällen, in denen eine chemische Reaktion zwischen dem Filterrückstand und einem Passivierungsmittel erwünscht ist, eine möglichst lange Reaktionszeit zwischen dem Passivierungsmittel und den bereits aufgebrochenen Filterrückstandteilchen erreichen. Mit feinkörnigeren Teilchen verläuft eine chemische Reaktion häufig schneller.

Optional kann in der Förderleitung stromabwärts des Bereichs einer derartigen Querschnittsverengung einen Diffusor aufweisen. Durch einen Diffusor kann beispielsweise der Druck in der Fluidströmung erhöht werden, sodass der Filterrückstand einer weiteren mechanischen Belastung ausgesetzt wird, was das Aufbrechen von Filterrückstandteilchen weiter fördern kann.

Bevorzugt ist die Fördervorrichtung so ausgebildet, dass im Filterrückstand optional auftretende Partikelagglomerate aufgebrochen werden, insbesondere bevorzugt so, dass der Filterrückstand nach dem Aufbrechen in Form von Partikeln mit einem Sekundärpartikeldurchmesser vorliegt, der dem maximal 100-fachen, mehr bevorzugt maximal 50-fachen, noch mehr bevorzugt maximal 10-fachen, insbesondere bevorzugt maximal 5-fachen des Primärpartikeldurchmessers entspricht.

Alternativ oder zusätzlich ist die Fördervorrichtung insbesondere so ausgebildet, dass im Filterrückstand optional auftretende Partikelagglomerate so aufgebrochen werden, dass der Filterrückstand nach dem Aufbrechen in Form von Partikeln mit einem Sekundärpartikeldurchmesser vorliegt, der maximal 200 µm, mehr bevorzugt maximal 100 µm beträgt.

Es ist dabei insbesondere bevorzugt, dass Partikelagglomerate in die Primärteilchen oder in Agglomerate aus wenigen Primärteilchen aufgebrochen werden.

Durch ein derartiges Aufbrechen kann beispielsweise eine Passivierung durch eine chemische Reaktion und/oder die Vermischung mit einem Inertisierungsmittel (z.B. Kalkpulver) gefördert werden.

Im Kontext der vorliegenden Erfindung wird unter der Partikelgröße oder dem Partikeldurchmesser bevorzugt der d50-Wert verstanden. Der d50-Wert kann dabei für Partikel des Aufbaumaterials und für Kondensatpartikel bzw. die darin enthaltenen Primärpartikel beispielsweise mittels Laserbeugung nach den etablierten und standardisierten Verfahren (z.B. nach ISO 13320 oder ASTM B822) bestimmt werden. Alternativ ist eine Bestimmung beispielsweise mittels dynamischer Bildanalyse (z.B. nach dem Standard ISO 13322-2) möglich. Die Größe von Agglomeraten kann ebenfalls in Form eines d50-Werts angegeben werden. Ein bestimmter d50-Wert bedeutet, dass 50% der Teilchen einen kleineren Durchmesser als den angegebenen Wert haben. Geeignete Methoden für die Bestimmung des d50-Werts von Agglomeraten sind beispielsweise Transmissionselektronenmikroskopie (TEM) und Rasterelekronenmikroskopie (REM), wobei die dadurch erhaltenen Aufnahmen zur Ermittlung des d50-Werts einer geeigneten Bildauswertung unterzogen werden.

Wenn die Fördervorrichtung über eine Düse wie beispielsweise eine Ejektordüse oder eine Venturidüse verfügt, kann es möglich sein, dass das Aufbrechen in der Düse oder stromabwärts der Düse erfolgt. Eine solche Düse kann daher neben ihrer Funktion beim Fördern des Filterrückstands unter anderem die Funktion aufweisen, für eine Zerkleinerung der Filterrückstandpartikel zu sorgen.

Bevorzugt ist die Förderfluidzuführung mit einem Förderfluidreservoir verbunden. Dadurch kann beispielsweise die Versorgung mit einem Förderfluid sichergestellt werden, welches einen für den Betrieb der Fördervorrichtung ausreichenden Druck aufweist, ohne dass eine Apparatur zur Verdichtung des Förderfluids erforderlich ist. Mehr bevorzugt beinhaltet das Förderfluidreservoir ein unter Druck stehendes Gas, insbesondere ein Inertgas oder ein Gemisch aus einem Inertgas und einem Passivierungsmittel. Als Passivierungsmittel wird bevorzugt Sauerstoff verwendet. Wenn die Fördervorrichtung auf diese Weise mit einem Förderfluid versorgt wird, welches ein Passivierungsmittel umfasst, kann beispielsweise eine chemische Reaktion zur Passivierung des Filterrückstands während und ggf. nach der Förderung durch die Förderleitung stattfinden, ohne dass eine separate Bevorratung und Einspeisung des Passivierungsmittels erforderlich sind.

Alternativ oder zusätzlich zu einem Förderfluidreservoir ist die Förderfluidzuführung so mit der Filterkammer verbunden, dass zumindest ein Teil des gefilterten Prozessgases in den Austrittsbereich gefördert wird, wobei die Fluidströmungserzeugungsvorrichtung mehr bevorzugt ein der Förderfluidzuführung zugeordnetes Gebläse und/oder einen der Förderfluidzuführung zugeordneten Verdichter umfasst. Dadurch kann beispielsweise gefiltertes Prozessgas als Förderfluid verwendet werden, sodass auf die Bereitstellung eines zusätzlichen Förderfluids verzichtet werden kann oder der Bedarf an zusätzlichem Fluid verringert ist.

Bevorzugt umfasst die Filtervorrichtung eine Passivierungsmittelzufuhrvorrichtung, die ausgebildet ist, die Fluidströmung mit einem Passivierungsmittel zu versetzen, wobei das Passivierungsmittel geeignet ist, den Filterrückstand durch eine chemische Reaktion zumindest teilweise zu passivieren.

Dabei ist es bevorzugt, dass das Passivierungsmittel ein gasförmiges Passivierungsmittel und/oder ein Oxidationsmittel, insbesondere Sauerstoff ist. Dadurch kann beispielsweise ein Passivierungsmittel bereitgestellt werden, das für die Passivierung typischerweise auftretender Prozessgasverunreinigungen geeignet ist.

Unter Sauerstoff wird dabei insbesondere O₂ verstanden. Aber auch der Einsatz von Ozon ist möglich. Ferner ist der Einsatz von Oxidationsmittel möglich, die Sauerstoff in anderer Form enthalten, beispielsweise Peroxide wie etwa Wasserstoffperoxid. Darüber hinaus ist im Rahmen der vorliegenden Erfindung die Verwendung von Oxidationsmitteln möglich, die nicht auf Sauerstoff basieren. Denkbar ist etwa Chlor oder ein chlorbasiertes Oxidationsmittel. Aber auch beispielsweise Wasser kann gegenüber entsprechend unedlen Metallen als Oxidationsmittel wirken.

Dabei ist es alternativ oder zusätzlich bevorzugt, dass die Passivierungsmittelzufuhrvorrichtung ausgebildet und/oder angeordnet ist, die Fluidströmung in einem oder mehreren der folgenden Bereiche mit dem Passivierungsmittel zu versetzen:
- im Austrittsbereich und/oder im Bereich der vorstehend erwähnten Düse (falls vorhanden)
- in der Förderfluidzuführung
- in der Förderleitung, mehr bevorzugt im Bereich der vorstehend erwähnten Querschnittsverengung (falls vorhanden).

Dadurch kann das Passivierungsmittel beispielsweise an der Stelle zugeführt werden, an der die chemische Reaktion zur Passivierung initiiert werden soll. Beispielsweise kann die chemische Reaktion dadurch forciert werden, dass größere Partikel oder Agglomerate der Verunreinigungen in kleinere Teilchen aufgebrochen werden, weil das Passivierungsmittel dann die Teilchen effektiver angreifen kann.

Nach einer nicht einschränkenden Theorie haben insbesondere Metallkondensate aufgrund der kleinen Primärpartikel eine sehr hohe spezifische Oberfläche (z.B. 20 m²/g oder noch mehr). Je größer die spezifische Oberfläche ist, desto schneller kann eine Reaktion in der Regel stattfinden, sofern die Oberfläche für das Reagens wie etwa Sauerstoff als Oxidationsmittel zugänglich ist. Die Agglomerate - gebildet aus kleinen, insbesondere sphärischen Primärteilchen - haben kleine Zwischenräume, die im Bereich der mittleren freien Weglänge des Sauerstoffs (68 nm bei 20°C) ist. Somit ist der Sauerstofftransport ins Innere von Agglomeraten stark behindert, beispielsweise könnte eine Knudsen-Diffusion gegeben sein. Die Behinderung des Sauerstofftransports bremst die Reaktion. Ein Aufbrechen der Agglomerate setzt nach der nicht einschränkenden Theorie die Oberfläche besser frei bzw. führt dazu, dass die Oberfläche zugänglicher ist und erhöht damit die Reaktionsrate. Sauerstoff muss entsprechend dieser Theorie nach dem Aufbrechen von Agglomeraten lediglich durch die Grenzschicht der Primärpartikel diffundieren und nicht zusätzlich durch die engen verwundenen Zwischenräume der Agglomerate.

Bevorzugt umfasst die Filtervorrichtung eine Energiezufuhrvorrichtung, insbesondere in Form einer Heizvorrichtung, die ausgebildet und/oder angeordnet ist, die Fluidströmung und/oder das Passivierungsmittel vor einem Zeitpunkt seines Zusetzens zu der Fluidströmung mit Energie zu beaufschlagen. Dadurch kann beispielsweise die chemische Reaktion zwischen dem Passivierungsmittel und den Verunreinigungen beschleunigt oder überhaupt erst gestartet werden. Beispielsweise laufen chemische Reaktionen bei erhöhten Temperaturen häufig schneller ab bzw. kann durch erhöhte Temperaturen die Aktivierungsenergiebarriere überwunden werden. Insbesondere in Fällen, in denen der Stofftransport (z.B. Passivierungsmittelzufuhr) nicht der limitierende Faktor ist, kann die Reaktionsgeschwindigkeit mit der Temperatur beispielsweise exponentiell ansteigen.

Alternativ oder zusätzlich zu einem chemisch reaktiven Passivierungsmittel wie beispielsweise einem Oxidationsmittel können auch auf andere Weise wirksame Stoffe zur Verminderung des Brandrisikos eingesetzt werden. Auf die Verwendung von Filterhilfsstoffen wird nachfolgend detailliert eingegangen. Zusätzlich oder alternativ kann beispielsweise eine Flüssigkeit, beispielsweise ein Öl (z.B. Siliconöl), eingesetzt werden, welche den Filterrückstand benetzt und so vor ungewolltem Sauerstoffzutritt schützt. Eine derartige Flüssigkeit kann beispielsweise dem Filterrückstand im Abfallbehälter zugegeben werden.

Bevorzugt umfasst die Filtervorrichtung eine Aufbringvorrichtung zum Aufbringen eines Filterhilfsstoffs, insbesondere eines pulverförmigen Filterhilfsstoffs, auf das mindestens eine Filterelement. Durch die Verwendung eines Filterhilfsstoffs können Filterrückstände inertisiert werden. Dabei kann die Verwendung eines Filterhilfsstoffs auch zusätzlich zur Verwendung eines Passivierungsmittels wie beispielsweise eines Oxidationsmittels (z.B. O₂) vorgesehen sein. Die Verwendung eines Filterhilfsstoffs kann beispielsweise in Kombination mit der erfindungsgemäßen Rezirkulation besonders effektiv sein, beispielsweise da durch die Rezirkulation eine gute Durchmischung von Filterrückstand und Filterhilfsstoff möglich sein kann.

Die Funktion des Filterhilfsstoffs besteht nach einer nicht einschränkenden Theorie darin, einen thermischen Ballast bereitzustellen und/oder die Filterrückstandspartikel räumlich voneinander zu trennen, um eine chemische Reaktion des Filterrückstands zu bremsen bzw. zu moderieren. Glasmehl kann beispielsweise aufschmelzen und die Schmelzenthalpie entzieht zusätzlich Wärme. Kalk kann sich beispielsweise bei ca. 800°C endotherm zersetzen. Diese Zersetzung nimmt Wärme auf.

Eine weitere Funktion des Filterhilfsstoffs besteht nach einer nicht einschränkenden Theorie darin, die Filtrierung zu verbessern, beispielsweise in dem Sinn, dass die Filter seltener gereinigt werden müssen. Der Filterhilfsstoff könnte beispielsweise eine Trennschicht zwischen Filter und Filtrat (Filterkuchen) ausbilden, wobei er dazu nach einer Abreinigung aufgebracht werden sollte.

Bei der erfindungsgemäßen Vorrichtung zur additiven Herstellung dreidimensionaler Objekte handelt es sich um eine Vorrichtung umfassend
- eine Prozesskammer, in der die additive Herstellung erfolgt,
- eine Prozessgasfördervorrichtung zum Fördern eines die Prozesskammer von einem Prozesskammereingang zu einem Prozesskammerausgang durchströmenden Prozessgases, wobei die Prozessgasfördervorrichtung ausgebildet ist, das Fördern zwischen dem Prozesskammereingang und dem Prozesskammerausgang bevorzugt zumindest teilweise im Kreislauf zu bewirken, und
- eine erfindungsgemäße Filtervorrichtung.

Die Prozesskammer ist dabei so mit der Filtervorrichtung verbunden, dass aus der Prozesskammer durch den Prozesskammerausgang austretendes Prozessgas in einen Prozessgaseinlass der Filtervorrichtung geleitet wird.

Durch die erfindungsgemäße Vorrichtung zur additiven Herstellung kann beispielsweise eine Vorrichtung bereitgestellt werden, bei deren Betrieb beispielsweise die vorstehend beschriebenen vorteilhaften Eigenschaften der erfindungsgemäßen Filtervorrichtung realisiert werden können.

Die erfindungsgemäße Filtervorrichtung kann so aufgebaut sein, dass damit eine konventionelle Vorrichtung zur additiven Herstellung mit einer Prozesskammer und einer Prozessgasfördervorrichtung nachgerüstet werden kann. Wenn die konventionelle Vorrichtung zur additiven Herstellung über eine nicht erfindungsgemäße Filtervorrichtung verfügt, kann diese zum Nachrüsten beispielsweise durch die erfindungsgemäße Filtervorrichtung ausgetauscht werden. Alternativ können beispielsweise auch die fehlenden Komponenten nachgerüstet werden.

Bei dem erfindungsgemäßen Verfahren handelt es sich um ein Verfahren zum Filtern eines Prozessgases, insbesondere eines Prozessgases einer additiven Herstellungsvorrichtung, und zum Nachbehandeln eines Filterrückstands. Das erfindungsgemäße Verfahren umfasst die Schritte:
- Leiten des Prozessgases durch mindestens ein in einer Filterkammer angeordnetes Filterelement,
- Erzeugen einer Fluidströmung,
- Zumindest teilweises Entnehmen des Filterrückstandes aus der Filterkammer, und
- Zumindest teilweises Fördern des Filterrückstands in der Fluidströmung, d.h. Fördern mittels der Fluidströmung, zurück in die Filterkammer.

Alternativ oder zusätzlich zum zumindest teilweisen Fördern des Filterrückstands zurück in die Filterkammer wird der Filterrückstand in der Fluidströmung zumindest teilweise in einen Auffangbehälter gefördert.

Bei der Durchführung des erfindungsgemäßen Verfahrens können beispielsweise die Vorteile realisiert werden, die vorstehend für die erfindungsgemäßen Filtervorrichtungen beschrieben sind.

Bevorzugt umfasst das Verfahren ferner den Schritt eines Abreinigens des mindestens einen Filterelements, um den Filterrückstand abzulösen. Dadurch kann das Abreinigen beispielsweise besonders effektiv und in kontrollierter Weise sowie zu gewünschten Zeitpunkten erfolgen.

Das Abreinigen kann beispielsweise mittels eines Gasdruckstoßes erfolgen, durch den Gas in der Richtung, die der Strömungsrichtung zum Filtern des Prozessgases entgegengesetzt ist, durch das mindestens eine Filterelement geleitet wird.

Wenn mehrere Filterelemente vorhanden sind, können diese auf diese Weise oder auf eine andere Weise gleichzeitig oder zu verschiedenen Zeitpunkten abgereinigt werden.

Bevorzugt umfasst das Verfahren ferner den Schritt eines Aufbringens eines Filterhilfsstoffs auf das mindestens eine Filterelement. In diesem Fall bilden der Filterhilfsstoff und aus dem Gas herausgefilterte Feststoffe den Filterrückstand. Durch einen Filterhilfsstoff kann beispielsweise eine zumindest teilweise Inertisierung der aus dem Prozessgas herausgefilterten Feststoffe erreicht werden.

Weiter bevorzugt werden der Filterhilfsstoff und die aus dem Gas herausgefilterten Feststoffe durch das Fördern des Filterhilfsstoffs durchmischt, beispielsweise weil es im Zuge der Rezirkulation zu einem effektiven Verwirbeln und damit Vermischen des Filterrückstands kommen kann.

Bei dem Filterhilfsstoff handelt es sich bevorzugt um einen pulverförmigen Filterhilfsstoff, insbesondere um ein kalkhaltiges Pulver und/oder ein Siliciumdioxidhaltiges Pulvers. Beispielsweise kann ein pulverförmiger Filterhilfsstoff mit einem partikelförmigen Feststoff, der aus dem Prozessgas herausgefiltert worden ist, effektiv durchmischt werden. Kalk und Siliciumdioxid können dabei in vielen Fällen zum Inertisieren geeignete Stoffe sein.

Bevorzugt wird im Zuge des erfindungsgemäßen Verfahrens zumindest ein Teil des Filterrückstands durch eine chemische Reaktion mit einem Passivierungsmittel passiviert wird, wobei mehr bevorzugt das Passivieren zumindest teilweise während des Förderns des Filterrückstands erfolgt, wobei noch mehr bevorzugt das Passivieren durch ein in der Fluidströmung enthaltenes Passivierungsmittel erfolgt, wobei insbesondere bevorzugt die Fluidströmung und/oder der Filterrückstand mit Energie beaufschlagt wird, wobei am meisten bevorzugt das Förderfluid beheizt wird.

Bevorzugt wird als Passivierungsmittel O₂ eingesetzt.

Dabei beträgt der O₂-Gehalt in der Fluidströmung bevorzugt mindestens 0,01 Vol.-% und/oder höchstens 20,8 Vol.-%, mehr bevorzugt mindestens 0,1 Vol.-% und/oder höchstens 10 Vol.-%.

Alternativ oder zusätzlich liegt der O₂-Gehalt in der Fluidströmung bevorzugt mindestens 1 Vol.-% und/oder höchstens 5 Vol.-% unterhalb der Sauerstoffgrenzkonzentration, mehr bevorzugt mindestens 1%, noch mehr bevorzugt mindestens 2%, insbesondere bevorzugt mindestens 3% unterhalb der Sauerstoffgrenzkonzentration.

Durch die Verwendung von Sauerstoff kann beispielsweise ein Passivierungsmittel verwendet werden, welches zur Oxidation typischer Filterrückstände geeignet ist. Die unkontrollierte Oxidation mit Luftsauerstoff ist ja gerade eine Situation, die erfindungsgemäß begrenzt oder verhindert werden soll. Somit kann diese unerwünschte Oxidation idealerweise dadurch verhindert werden, dass eine kontrollierte Oxidation durchgeführt wird.

Die angegebenen Konzentrationsbereiche können beispielsweise eine in vielen Fällen geeignet reaktive Atmosphäre bereitstellen.

Als Sauerstoffgrenzkonzentration wird jene maximale Sauerstoffkonzentration eines sauerstoffhaltigen Gasgemischs, eines sauerstoffhaltigen Aerosols etc. bezeichnet, bei der eine Explosion nicht auftritt. In anderen Worten kann die Explosionsgefahr durch eine Unterschreitung der Sauerstoffgrenzkonzentration verringert oder gänzlich ausgeschaltet werden. Eine Explosion im Inneren der Filtervorrichtung ist aus Sicherheitsgründen unerwünscht. Somit kann durch das Unterschreiten der Sauerstoffgrenzkonzentration beispielsweise die kontrollierte Oxidation mit Sauerstoff unter sicheren Bedingungen durchgeführt werden. Ferner kann sich beispielsweise die Explosionsgefahr im Störungsfall verringern lassen.

Bevorzugt wird die Fluidströmung durch eine Düse und/oder eine Querschnittsverengung einer Förderleitung zumindest lokal beschleunigt. Dadurch können beispielsweise im Filterrückstand enthaltene Partikelagglomerate zumindest teilweise in kleinere Teilchen aufgebrochen werden, was beispielsweise wiederum eine chemische Reaktion zur Passivierung effektiver machen kann.

Bevorzugt wird zumindest der Schritt des zumindest teilweisen Förderns des Filterrückstands in der Fluidströmung zurück in die Filterkammer bzw. zumindest der Schritt des zumindest teilweisen Förderns des Filterrückstands in den Auffangbehälter nur dann durchgeführt, wenn eine additive Herstellung dreidimensionaler Objekte mittels der additiven Herstellungsvorrichtung inaktiv ist. Das heißt, dass die additive Herstellung dreidimensionaler Objekte unterbrochen wird, wenn der Schritt des zumindest teilweisen Förderns des Filterrückstands in der Fluidströmung zurück in die Filterkammer durchgeführt wird. Oder die additive Herstellung dreidimensionaler Objekte ist abgeschlossen und die nachfolgende Herstellung dreidimensionaler Objekte hat noch nicht begonnen, wenn der Schritt des zumindest teilweisen Förderns des Filterrückstands in der Fluidströmung zurück in die Filterkammer durchgeführt wird. Dadurch besteht beispielsweise kein Bedarf für die Filterung von Prozessgas, während die Rezirkulation durchgeführt wird. Somit kann die Verbindung zwischen der Prozesskammer und der Filterkammer vorübergehend fluiddicht abgesperrt werden, während die Rezirkulation stattfindet. Auf diese Weise kann beispielsweise vermieden werden, dass ein in der Fluidströmung zur Rezirkulation vorhandenes Passivierungsmittel in die Prozesskammer gelangt.

Alternativ kann der Schritt des zumindest teilweisen Förderns des Filterrückstands in der Fluidströmung zurück in die Filterkammer auch dann durchgeführt werden, wenn eine additive Herstellung dreidimensionaler Objekte mittels der additiven Herstellungsvorrichtung aktiv ist. In diesem Fall ist es bevorzugt, dass diese Fluidströmung kein Passivierungsmittel umfasst. Dadurch lässt sich beispielsweise verhindern, dass Passivierungsmittel in den Prozessgas-Kreislauf und damit in die Prozesskammer gelangt, was in der Regel unerwünscht ist, selbst wenn die Reinjektionsstelle, an die Fluidströmung in die Filterkammer im Zuge der Rezirkulation eintritt, mit dem mindestens einen Filterelement in Fluidverbindung steht. In diesem Fall ist die Verwendung von Filterhilfsstoffen bevorzugt, um eine möglichst effektive Reduktion der Reaktivität des Filterrückstands durch die Rezirkulation zu erreichen.

Alternativ wird zumindest der Schritt des zumindest teilweisen Förderns des Filterrückstands in der Fluidströmung zurück in die Filterkammer bzw. zumindest der Schritt des zumindest teilweisen Förderns des Filterrückstands in den Auffangbehälter durchgeführt, während der Schritt des Leitens des Prozessgases durch das mindestens eine Filterelement derselben Filterkammer nicht durchgeführt wird. Ähnlich wie vorstehend für die Alternative, bei der die additive Herstellung während des Förderns inaktiv ist, kann auch dadurch beispielsweise vermieden werden, dass ein in der Fluidströmung zur Rezirkulation vorhandenes Passivierungsmittel in die Prozesskammer gelangt. Dabei können Rezirkulation und additive Herstellung gleichzeitig stattfinden, was den Betrieb der Filtervorrichtung und der additiven Herstellungsvorrichtung flexibler macht.

Dabei ist es mehr bevorzugt, dass zumindest während des Schritts des zumindest teilweisen Förderns des Filterrückstands in der Fluidströmung zurück in die Filterkammer bzw. zumindest der Schritt des zumindest teilweisen Förderns des Filterrückstands aus der Filterkammer in einen Auffangbehälter dieselbe Filterkammer gegenüber dem aus der additiven Herstellungsvorrichtung zugeführten Prozessgas verschlossen wurde. Dadurch kann beispielsweise vermieden werden, dass Fluid aus der Förderströmung, welches ein Passivierungsmittel enthalten könnte, ungewollt in die Prozesskammer der additiven Herstellungsvorrichtung gelangt.

Alternativ oder zusätzlich ist es dabei bevorzugt, dass mindestens eine erste Filterkammer und eine zweite Filterkammer zum Durchführen des Verfahrens eingesetzt werden und während des Durchführens des Schritts des zumindest teilweisen Förderns des Filterrückstands in der Fluidströmung zurück in die erste Filterkammer Prozessgas durch das mindestens eine Filterelement der zweiten Filterkammer geleitet wird und/oder dass mindestens eine erste Filterkammer und eine zweite Filterkammer zum Durchführen des Verfahrens eingesetzt werden und während des Durchführens des Schritts des zumindest teilweisen Förderns des Filterrückstands in den Auffangbehälter das Fluid vom Auffangbehälter in die erste Filterkammer zurück strömt und Prozessgas durch das mindestens eine Filterelement der zweiten Filterkammer geleitet wird, wobei in diesem Betriebszustand die erste Filterkammer von der Umwälzung von Prozessgas (als Prozessgaskreislauf) durch eine Prozesskammer einer additiven Herstellvorrichtung bevorzugt gasdicht entkoppelt ist. Auf diese Weise kann beispielsweise die additive Herstellung fortgesetzt werden, während eine Passivierung des Filterrückstands durchgeführt wird.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Filtervorrichtung gemäß einem ersten Ausführungsbeispiel der Erfindung.
- Fig. 2: ist eine schematische im Schnitt dargestellte Ansicht eines Details der Filtervorrichtung gemäß dem ersten Ausführungsbeispiel.
- Fig. 3: ist eine schematische, teilweise im Schnitt dargestellte Ansicht einer Filtervorrichtung gemäß einem zweiten Ausführungsbeispiel der Erfindung.
- Fig. 4: ist eine schematische, teilweise im Schnitt dargestellte Ansicht einer weiteren Filtervorrichtung gemäß einer Variante des zweiten Ausführungsbeispiels.
- Fig. 5: ist eine schematische, teilweise im Schnitt dargestellte Ansicht einer Filtervorrichtung gemäß einem dritten Ausführungsbeispiel der Erfindung.
- Fig. 6: ist eine schematische, teilweise im Schnitt dargestellte Ansicht einer Filtervorrichtung gemäß einem neunten Ausführungsbeispiel der Erfindung.
- Fig. 7A: ist eine schematische, teilweise im Schnitt dargestellte Ansicht einer Filtervorrichtung gemäß einem elften Ausführungsbeispiel der Erfindung.
- Fig. 7B: ist eine schematische Draufsicht auf die unterhalb der in Fig. 7A eingezeichneten Schnittebene A-A liegenden Komponenten.
- Fig. 7C: ist eine Schnittdarstellung entsprechend der in Fig. 7B eingezeichneten Schnittebene B-B.
- Fig. 8: ist eine schematische, teilweise im Schnitt dargestellte Ansicht einer Vorrichtung zur additiven Herstellung dreidimensionaler Objekte gemäß weiterer Ausführungsbeispiele der Erfindung.
- Fig. 9: ist eine schematische Darstellung des Verfahrens gemäß einem weiteren Ausführungsbeispiel der Erfindung.

### Erstes Ausführungsbeispiel

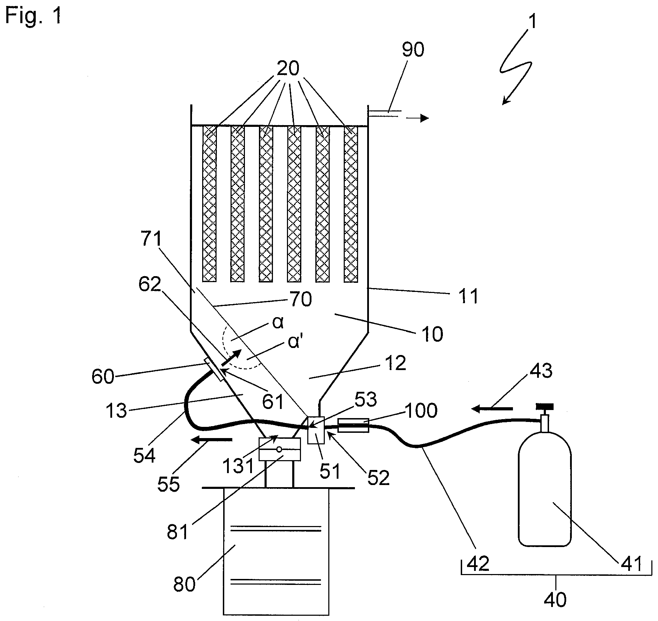

Die Filtervorrichtung 1 gemäß dem ersten Ausführungsbeispiel ist in Fig. 1 in einer möglichen Betriebsposition dargestellt. Das heißt, sie ist so angeordnet, dass mittels der Filtervorrichtung 1 ein Prozessgas gefiltert und dadurch von im Prozessgas mitgeführten Feststoffen gereinigt werden kann. In der nachfolgenden Beschreibung verwendete Lage- und Richtungsbezeichnungen wie etwa "unten"/"oben", "unterhalb"/"oberhalb", "nach unten"/"nach oben" etc. beziehen sich dabei auf die dargestellte Betriebsposition.

Bei dem Prozessgas kann es sich, wie erwähnt, beispielsweise um das Prozessgas einer Vorrichtung zur additiven Herstellung dreidimensionaler Objekte wie etwa einer Anlage zum selektiven Lasersintern handeln. Bei den Feststoffen, die vom Prozessgas mitgeführt werden, kann es sich daher um solche Feststoffe handeln, die in einer derartigen Vorrichtung an das Prozessgas abgegeben werden können, insbesondere aus verdampftem Aufbaumaterial entstandene Kondensatpartikel und/oder aufgewirbeltes Aufbaumaterial.

Die Filtervorrichtung 1 umfasst eine von einer Filterkammerwandung 11 gebildete Filterkammer 10, in der mindestens ein Filterelement 20 angeordnet ist. In Fig. 1 sind beispielhaft sechs in der Filterkammer angeordnete Filterelemente 20 dargestellt. Die Filterkammer 10 weist einen Prozessgaseinlass (in Fig. 1 nicht dargestellt) und einen Prozessgasauslass (in Fig. 1 nicht dargestellt) auf, wobei der Prozessgaseinlass, der Prozessgasauslass und das mindestens eine Filterelement 20 so angeordnet sind, dass ein Prozessgas, das über den Prozessgaseinlass in die Filterkammer 10 eintritt und über den Prozessgasauslass die Filterkammer wieder verlässt, mittels des mindestens einen Filterelements 20 gefiltert wird. Beispielsweise kann es sich bei dem Prozessgaseinlass und dem Prozessgasauslass um Öffnungen in der Filterkammerwandung 11 handeln, an die entsprechende Prozessgasleitungen angeschlossen sind. Durch das Filtern des Prozessgases werden die vom Prozessgas mitgeführten Feststoffe zumindest teilweise abgetrennt, indem sie vom mindestens einen Filterelement 20 zurückgehalten werden. Die zurückgehaltenen Feststoffe bleiben zumindest vorerst am mindestens einen Filterelement 20 zurück.

Die zurückgehaltenen Feststoffe werden allgemein auch als "Filterrückstand" bezeichnet.

Ein Bereich im Inneren der Filterkammer 10, der unterhalb des mindestens einen Filterelements 20 angeordnet ist, ist ausgebildet, Filterrückstand, der vom mindestens einen Filterelement abgelöst wird oder sich von diesem ablöst, aufzunehmen. Das heißt, dass dieser Filterrückstand im einfachsten Fall in diesen Bereich fällt.

Das Ablösen kann dabei beispielsweise durch Einwirkung der Schwerkraft erfolgen. Um das Ablösen zu bewirken oder zu forcieren, kann eine optionale Ablösevorrichtung (in Fig. 1 nicht dargestellt) vorgesehen sein. Die Ablösevorrichtung kann beispielsweise ausgebildet sein, den am mindestens einen Filterelement 20 anhaftenden Filterrückstand mittels Einwirkung von Gas abzulösen. Dabei ist es bevorzugt, das Filtern des Prozessgases von Zeit zu Zeit zu unterbrechen und ein Gas in der Richtung durch das mindestens eine Filterelement zu leiten, die der Strömungsrichtung des Prozessgases während seiner Filterung entgegengesetzt ist. Zum Ablösen von Filterrückstand wird das Gas bevorzugt stoßartig durch das mindestens eine Filterelement 20 geleitet. Das Ablösen ist jedoch nicht auf die vorstehend beschriebene Vorgehensweise beschränkt, sondern kann auch auf andere Weise erfolgen, beispielsweise durch Abblasen, Abkehren, Abkratzen, Abschütteln etc. Auch eine Kombination mehrerer Techniken zum Ablösen ist möglich. Wenn es die verwendete Technik zum Ablösen zulässt, kann das Filtern des Prozessgases mittels eines Filterelements 20 fortgesetzt werden, während Filterrückstand von demselben abgelöst wird. Wenn mehrere Filterelemente 20 vorgesehen sind, kann das Ablösen von Filterrückstand von zwei verschiedenen Filterelementen 20 gleichzeitig oder hintereinander durchgeführt werden.

Der Bereich im Inneren der Filterkammer 10 unterhalb des mindestens einen Filterelements 20, der ausgebildet ist, abgelösten Filterrückstand aufzunehmen, wird in der nachfolgenden Beschreibung des ersten Ausführungsbeispiels als "erster Sammelbereich" 12 bezeichnet. Der erste Sammelbereich 12 wird vom unteren Abschnitt der Filterkammerwandung 11 und einer Trennwand 70, die den ersten Sammelbereich 12 von einem zweiten Sammelbereich 13 trennt, gebildet. Auf die Trennwand und den zweiten Sammelbereich 13 wird nachfolgend näher eingegangen. Der erste Sammelbereich 12 ist bevorzugt trichterartig ausgebildet, d.h. nach unten hin verjüngt und nach oben hin offen, wie in Fig. 1 dargestellt. Von mindestens einem Filterelement 20 abgelöster Filterrückstand kann von oben in den ersten Sammelbereich 12 fallen, in diesem gesammelt und durch eine im unteren Bereich des ersten Sammelbereichs 12 angeordnete Öffnung aus dem ersten Sammelbereich 12 entnommen werden.

Die Filtervorrichtung 1 umfasst eine Fluidströmungserzeugungsvorrichtung 40, welche ausgebildet ist, eine Fluidströmung zu erzeugen. Im ersten Ausführungsbeispiel umfasst die Fluidströmungserzeugungsvorrichtung 40 beispielsweise ein Förderfluidreservoir 41 und eine Förderfluidzuführleitung 42, wobei die Fördervorrichtung 43, die nachfolgend beschrieben wird, über die Förderfluidzuführleitung 42 mit dem Förderfluidreservoir 41 verbunden ist. Das Förderfluidreservoir 41 stellt einen Vorrat an Förderfluid bereit. Die Menge des Förderfluids, das pro Zeiteinheit durch die Förderfluidzuführleitung 42 strömt, kann bevorzugt durch eine Reguliervorrichtung (in Fig. 1 nicht dargestellt) eingestellt und/oder geregelt werden. Die Strömungsrichtung des Förderfluids durch die Förderfluidzuführleitung 42 ist in Fig. 1 durch den Pfeil 43 symbolisiert.

In Fig. 1 ist das Förderfluidreservoir 41 beispielhaft als Druckgasflasche schematisch dargestellt. Eine Druckgasflasche mit optionalem Reduzierventil ist in der Regel geeignet, um das Förderfluid in der für eine längere Betriebsdauer benötigten Menge und mit dem benötigten Druck bereitzustellen. Anstelle einer Druckgasflasche kann ein anderes Behältnis, das zum Speichern des Förderfluids geeignet ist, verwendet werden, wobei erforderlichenfalls zusätzlich zum Behältnis eine Vorrichtung zum Erhöhen oder Erniedrigen des Fluiddrucks und/oder eine Vorrichtung zum Einstellen und/oder Regeln des Fluiddrucks vorgesehen sein kann. Auch die Verwendung einer anderen Fluidquelle ist möglich, beispielsweise eine Hausversorgung mit Argon oder Stickstoff oder ein Stickstoffgenerator.

Die Filtervorrichtung 1 umfasst ferner eine Fördervorrichtung 50, welche ausgebildet ist, Filterrückstand aus der Filterkammer 10 zu entnehmen, und diesen, nachdem er eine bestimmte Förderstrecke zurückgelegt hat, in die Filterkammer 10 zurück zu fördern.

Die Fördervorrichtung 50 umfasst einen Austrittsbereich 51, der mit der bevorzugt am unteren Ende des ersten Sammelbereichs 12 angeordneten Öffnung verbunden ist. Optional kann zwischen dem ersten Sammelbereich 12 und dem Austrittsbereich 51 eine Absperrvorrichtung (in Fig. 1 nicht dargestellt) vorgesehen sein, welche gezielt geöffnet und geschlossen werden kann.

Der Austrittsbereich 51 umfasst eine Förderfluidzuführung 52 und einen Förderfluidausgang 53. Die Förderfluidzuführung 52 ist dazu bestimmt, dass durch sie das Förderfluid in den Austrittsbereich 51 einströmen kann. Dazu ist die Förderfluidzuführung 52 mit der Förderfluidzuführleitung 42 verbunden. Der Förderfluidausgang 53 ist dazu bestimmt, dass durch ihn das Förderfluid wieder aus dem Austrittsbereich 51 herausströmen kann, wobei Filterrückstand und weiteres Fluid, die aus dem ersten Sammelbereich 12 in den Austrittsbereich 51 gelangen, mit dem Förderfluid aus dem Austrittsbereich 51 gefördert werden. Das aus dem Förderfluidausgang 53 strömende Fluid strömt in eine Förderleitung 54, deren erstes Ende mit dem Förderfluidausgang 53 verbunden ist. Die Strömungsrichtung des Fluids durch die Förderleitung 54 ist in Fig. 1 durch den Pfeil 55 symbolisiert.

Gemäß dem ersten Ausführungsbeispiel umfasst die Förderfluidzuführung 52 eine Düse. Dies kann auch bedeuten, dass die Förderfluidzuführung 52 insgesamt als Düse ausgebildet ist. Wenn Förderfluid durch die Förderfluidzuführung 52 strömt, wird das Förderfluid durch die Düse beschleunigt und dadurch ein Ansaugdruck erzeugt, durch den Filterrückstand und gegebenenfalls im ersten Sammelbereich 12 befindliches Fluid in den Austrittsbereich 51 gesaugt werden. Der aus dem ersten Sammelbereich 12 angesaugte Filterrückstand und das gegebenenfalls aus dem ersten Sammelbereich 12 angesaugte Fluid werden durch den Förderfluidausgang 53 aus dem Austrittsbereich 51 ausgestoßen.

Diese Ausgestaltung des Austrittsbereichs 51 mit einer derartigen Düse, die einen Ansaugdruck erzeugt, wird häufig als "Ejektor" bezeichnet. Alternative Begriffe sind beispielsweise "Strahlpumpe", "Treibmittelpumpe" und "Jetpumpe". Eine derartige Düse eines Ejektors wird häufig als "Ejektordüse" oder "Treibdüse" bezeichnet.

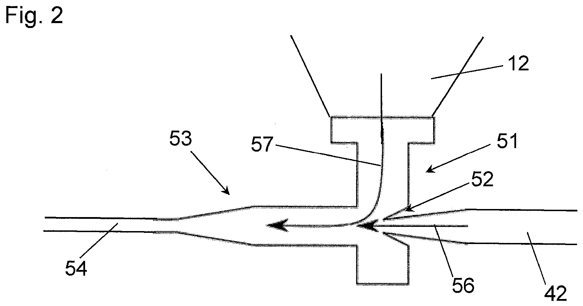

Fig. 2 ist eine Detailansicht, die ein konkretes Beispiel des Austrittsbereichs 51, der als Düse ausgebildeten Förderfluidzuführung 52 und des Förderfluidausgangs 53 gemäß dem ersten Ausführungsbeispiel, die Bestandteile des Ejektors sind, schematisch im Schnitt zeigt. Die Strömung des durch die Förderfluidzuführung 52 einströmenden Förderfluids ist darin durch den Pfeil 56 symbolisiert. Das Ansaugen von Filterrückstand und gegebenenfalls Fluid aus dem ersten Sammelbereich 12 in den Austrittsbereich 51 und das Fördern des angesaugten Filterrückstands und gegebenenfalls des angesaugten Fluids gemeinsam mit dem Förderfluid durch den Förderfluidausgang 53 und weiter durch die Förderleitung 54 ist durch den Pfeil 57 symbolisiert.

Wie erwähnt strömt das aus dem Förderfluidausgang 53 strömende Fluid in eine Förderleitung 54, deren erstes Ende mit dem Förderfluidausgang 53 verbunden ist. Das andere Ende der Förderleitung 54 ist mit der Filterkammer 10 verbunden, sodass das durch die Förderleitung 54 strömende Fluid in die Filterkammer 10 strömt. Zu diesem Zweck ist das betreffende Ende der Förderleitung 54 beispielsweise durch ein Befestigungselement 60 mit der Wandung 11 der Filterkammer 10 verbunden, sodass die Förderleitung 54 an einer Reinjektionsstelle 61 in die Filterkammer 11 mündet. Die Strömungsrichtung des an der Reinjektionsstelle 61 in das Innere der Filterkammer 10 eintretenden Fluids ist in Fig. 1 durch den Pfeil 62 symbolisiert.

Das Fluid tritt dabei in einen zweiten Sammelbereich 13 ein. Der zweite Sammelbereich 13 ist vom ersten Sammelbereich 12 durch eine Trennwand 70 getrennt, wobei die Trennwand 70 keine vollständige Abtrennung zwischen dem ersten Sammelbereich 12 und dem zweiten Sammelbereich 13 schafft, sondern eine lediglich bereichsweise Abtrennung, bei der zwischen dem oberen Bereich der Trennwand 70 und der Filterkammerwandung 11 eine Öffnung 71 vorliegt, durch die eine Fluidverbindung zwischen dem zweiten Sammelbereich 13 und dem ersten Sammelbereich 12 und/oder dem mindestens einen Filterelement 20 besteht. Das heißt es kann Fluid vom zweiten Sammelbereich 13 in den ersten Sammelbereich 12 bzw. in den Bereich des mindestens einen Filterelements 20 gelangen.

Bevorzugt ist die Trennwand 70 so angeordnet, dass das an der Reinjektionsstelle 61 in den zweiten Sammelbereich eintretende Fluid auf die Trennwand 70 trifft. Weiter bevorzugt prallen dadurch die vom Fluid mitgeführten Partikel auf die Trennwand 70.

Alternativ oder zusätzlich hat die Trennwand 70 bevorzugt eine Form, die der in Fig. 1 dargestellten geraden Schnittkontur entspricht. Die Trennwand kann dabei eben sein. Die Trennwand kann dabei auch gewölbt sein, beispielsweise im Fall einer im unteren Bereich konischen Filterkammer 10 ebenfalls konisch, d.h. so, dass horizontale Schnitte des zweiten Sammelbereichs 13 eine von der Filterkammerwandung 11 und der Trennwand 70 begrenzte sichelförmige Form aufweisen.

Als Aufprallwinkel derjenige Winkel verstanden, der von der Aufprallrichtung (Pfeil 62) nach oben hin zur Trennwand 70 gemessen wird. Der Aufprallwinkel ist in Fig. 1 mit dem Symbol α gekennzeichnet, d.h. es handelt sich nicht um den Supplementwinkel α'.

In der in Fig. 1 dargestellten Situation beträgt der Aufprallwinkel α ca. 90°. Diese Wahl des Aufprallwinkels kann bevorzugt sein, weil dadurch beispielsweise die Wirkung des Aufpralls maximiert werden kann. Dadurch kann beispielsweise das Aufbrechen der Partikel beim Aufprall besonders effektiv sein. Alternativ kann beispielsweise ein Aufprallwinkel von kleiner als 90°, etwa 30° oder mehr, gewählt werden. Dadurch kann beispielsweise die Trennwand nicht nur als Prallwand dienen, sondern die Partikel zusätzlich in Richtung des Ausgangs 131 des zweiten Sammelbereichs 12 leiten. Der Ausgang 131 des zweiten Sammelbereichs 12 wird auch als "Filterrückstandausgang" bezeichnet.

Bevorzugt ist ein unterer Bereich des zweiten Sammelbereichs 13 unterhalb des ersten Sammelbereichs 12 angeordnet, wie dies in Fig. 1 dargestellt ist.

Bevorzugt ist die Förderleitung 54 als eine starre Leitung insbesondere als Metallrohr ausgeführt.

Bevorzugt ist die Förderleitung 54 thermisch isoliert, wobei die thermische Isolierung in Fig. 1 nicht dargestellt ist. Bei der thermischen Isolierung kann es sich beispielsweise um einen Isoliermantel handeln, der zumindest einen Abschnitt der Förderleitung umgibt.

Bevorzugt hat die Förderleitung 54 einen zumindest annähernd kreisförmigen Querschnitt und weist einen Innendurchmesser von mindestens 2 mm, mehr bevorzugt mindestens 10 mm, noch mehr bevorzugt mindestens 15 mm und besonders bevorzugt mindestens 20 mm auf und/oder von höchstens 50 mm, mehr bevorzugt von höchstens 40 mm, noch mehr bevorzugt von höchstens 35 mm, besonders bevorzugt von höchstens 30 mm auf.

Optional umfasst die Filtervorrichtung 1 einen Abfallbehälter 80, welcher an den zweiten Sammelbereich 13 angekoppelt bzw. ankoppelbar ist. Die Ankopplung kann dabei direkt erfolgen, d.h. ohne dass eine Kammer, ein Rohr oder dergleichen zwischen dem zweiten Sammelbereich 13 und dem Abfallbehälter 80 angeordnet ist. Die Ankopplung kann dabei auch indirekt erfolgen, d.h. so, dass zwischen dem zweiten Sammelbereich 13 und dem Abfallbehälter 80 eine Kammer, eine Leitung, ein Rohr oder dergleichen angeordnet ist. Der Abfallbehälter 80 dient dazu, Filterrückstand, der durch den Ausgang 131 aus dem zweiten Sammelbereich 13 entfernt wird, aufzunehmen. Der Ausgang 131 des zweiten Sammelbereichs 13 wird dabei bevorzugt durch eine Öffnung im unteren Bereich des zweiten Sammelbereichs 13 gebildet. Bevorzugt weist die Filtervorrichtung 1 eine erste Absperrvorrichtung 81 auf, durch die das Innere des angekoppelten Abfallbehälters 80 vom zweiten Sammelbereich 13 fluiddicht abtrennbar ist. Bei der ersten Absperrvorrichtung 81 kann es sich beispielsweise um eine Absperrklappe, etwa eine Doppelklappe, handeln.

Optional umfasst die Filtervorrichtung 1 einen Förderfluidaustritt 90. Bei dem Förderfluidaustritt 90 kann es sich beispielsweise um einen Fluidauslass handeln, der auf der Reingas-Seite des mindestens einen Filterelements 20 angeordnet ist, wenn der zweite Sammelbereich 13 und der Bereich der Filterkammer 10, in dem das mindestens eine Filterelement 20 angeordnet ist, in Fluidverbindung stehen, beispielsweise über die obenstehend bereits beschriebene Öffnung 71. Eine derartige Anordnung des Förderfluidaustritts 90 ist in Fig. 1 eingezeichnet. Bei einer derartigen Anordnung des Förderfluidaustritts kann beispielsweise auf ein separates Filterelement zum Filtern des austretenden Förderfluids verzichtet werden. Das Förderfluid kann alternativ beispielsweise in den Prozessgaskreislauf eingespeist werden, insbesondere wenn es kein Passivierungsmittel umfasst.

Das Förderfluidreservoir 41 kann optional ein Förderfluid bereitstellen, welches ein Passivierungsmittel umfasst oder aus einem Passivierungsmittel besteht. Bevorzugt wird in diesem Fall ein Förderfluid in Form eines Gemischs aus einem Inertgas wie beispielsweise Argon und oder Stickstoff und einem Oxidationsmittel wie beispielsweise Sauerstoff verwendet.

Das Passivierungsmittel ist dazu bestimmt, mit den vom Prozessgas mitgeführten Partikeln chemisch zu reagieren.

Wenn eine chemische Reaktion mit einem Passivierungsmittel erwünscht ist, kann alternativ ein Förderfluidreservoir 41 verwendet werden, welches ein Förderfluid ohne Passivierungsmittel oder mit einer zu geringen Menge an Passivierungsmittel bereitstellt, wobei die Fluidströmung mittels einer optionalen Passivierungsmittelzufuhrvorrichtung (in Fig. 1 nicht dargestellt) an einer geeigneten Stelle mit einem Passivierungsmittel versetzt wird. Die Passivierungsmittelzufuhrvorrichtung kann beispielsweise ein Passivierungsmittelreservoir und eine Passivierungsmittelleitung zum Einleiten von Passivierungsmittel in die Fluidströmung umfassen. Die Einleitung kann dabei beispielsweise in die Förderfluidzuführleitung 42 und/oder in den Austrittsbereich 51 und/oder in die Förderleitung 54 erfolgen.

Optional umfasst die Filtervorrichtung 1 eine Energiezufuhrvorrichtung 100 zum Beaufschlagen der Fluidströmung und/oder des Passivierungsmittels mit Energie. Bevorzugt handelt es sich bei der Energiezufuhrvorrichtung 100 um eine Heizvorrichtung. Die in Fig. 1 gezeigte Positionierung der optionalen Energiezufuhrvorrichtung 100 an der Förderfluidzuführleitung 42 nahe am Austrittsbereich 51 ist lediglich beispielhaft. Eine andere Positionierung ist, wie erwähnt, möglich. Möglich ist es ferner, dass die Energiezufuhrvorrichtung 100 an mehreren Stellen Energie in die Fluidströmung und/oder das Passivierungsmittel einbringt, beispielsweise indem die Energiezufuhrvorrichtung 100 mehrere Heizelemente umfasst, die an verschiedenen Stellen angeordnet sind. Insbesondere dann, wenn die Energiezufuhrvorrichtung 100 im Bereich der Förderfluidzuführleitung 42 angeordnet ist, kann es sich um eine im Inneren der Leitung angeordnete und somit besonders effektive Heizvorrichtung handeln, da an dieser Stelle noch keine Partikel in der Fluidströmung enthalten sind, die die Heizvorrichtung verschmutzen könnten. Bei einer Heizeinrichtung kann es sich beispielsweise um eine Heizwendel, die im Inneren einer Leitung oder an deren Außenwand angeordnet ist, oder um mehrere solche Heizwendeln handeln.

Optional umfasst die Filtervorrichtung 1 einen Sensor, der bevorzugt mindestens einen Druck und/oder eine Temperatur und/oder eine chemische Zusammensetzung und/oder eine Fluidmenge und/oder eine Strömungsgeschwindigkeit des Fluids erfassen kann (in Fig. 1 nicht dargestellt). Der mindestens eine Sensor kann beispielsweise so angeordnet sein, dass der die Eigenschaften des Fluids in der Förderleitung 54 bestimmt. Alternativ oder zusätzlich kann der mindestens eine Sensor auch in der Filterkammer 10 (z.B. im ersten und/oder zweiten Sammelbereich) und/oder in der Förderfluidzuleitung angeordnet sein.

Durch einen Sensor kann beispielsweise überwacht werden, ob die für den Betrieb der Fördervorrichtung 50 geeigneten Eigenschaften der Fluidströmung vorliegen. Durch einen Sensor kann alternativ oder zusätzlich beispielsweise auch überwacht werden, ob für eine gewünschte chemische Reaktion zwischen einem Passivierungsmittel und dem Filterrückstand geeignete Bedingen (z.B. hinsichtlich Passivierungsmittelkonzentration, Temperatur und/oder Druck) vorliegen. Gesteuert durch von einem derartigen Sensor ausgegebene Signale können beispielsweise die Temperatur, der Druck und die Menge eines Passivierungsmittels in dem Bereich der Filtervorrichtung, in dem eine chemische Reaktion erwünscht ist, geregelt werden.

### Zweites Ausführungsbeispiel

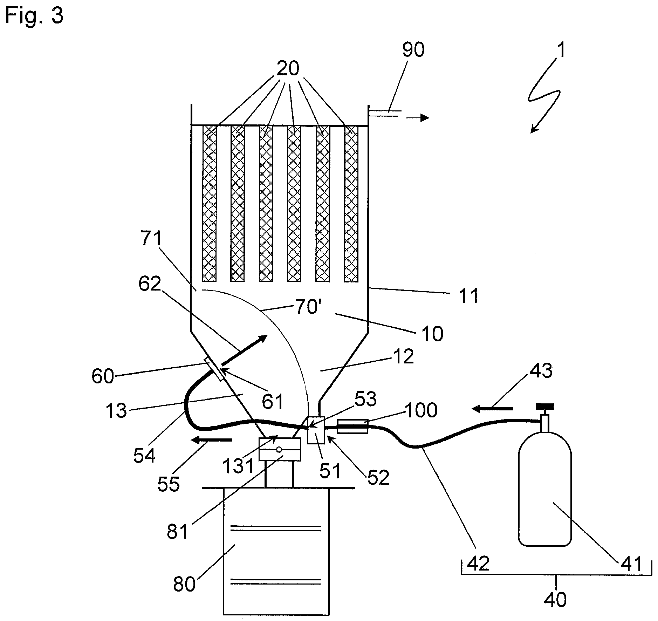

Die Filtervorrichtung 1 gemäß dem zweiten Ausführungsbeispiel ist in Fig. 3 dargestellt.

Die Bestandteile und Eigenschaften der Filtervorrichtung 1 gemäß dem zweiten Ausführungsbeispiel, die denjenigen der Filtervorrichtung 1 gemäß dem ersten Ausführungsbeispiel entsprechen, werden nachfolgend nicht gesondert beschrieben. Hinsichtlich der Gemeinsamkeiten wird auf die obenstehende Beschreibung zum ersten Ausführungsbeispiel verwiesen. Die nachfolgende Beschreibung ist auf die Unterschiede beschränkt. Einander entsprechende Komponenten der Filtervorrichtung 1 des ersten und des zweiten Ausführungsbeispiels werden zudem mit gleichen Bezugszeichen bezeichnet. Alle diejenigen Bestandteile und Eigenschaften der Filtervorrichtung 1, die für das erste Ausführungsbeispiel als optionale Merkmale beschrieben sind, stellen auch für das zweite Ausführungsbeispiel optionale Merkmale dar.

Die Filtervorrichtung 1 gemäß dem zweiten Ausführungsbeispiel unterscheidet sich von der Filtervorrichtung 1 gemäß dem ersten Ausführungsbeispiel darin, dass die Trennwand 70' eine gekrümmt Form aufweist, die der in Fig. 3 dargestellten gekrümmten Schnittkontur entspricht. Eine in dieser Weise gekrümmte Form kann beispielsweise die auf die Trennwand 70' auftreffende Fluidströmung bzw. die von dieser mitgeführten Partikel zumindest teilweise in den unteren Bereich des zweiten Sammelbereichs 13 leiten.

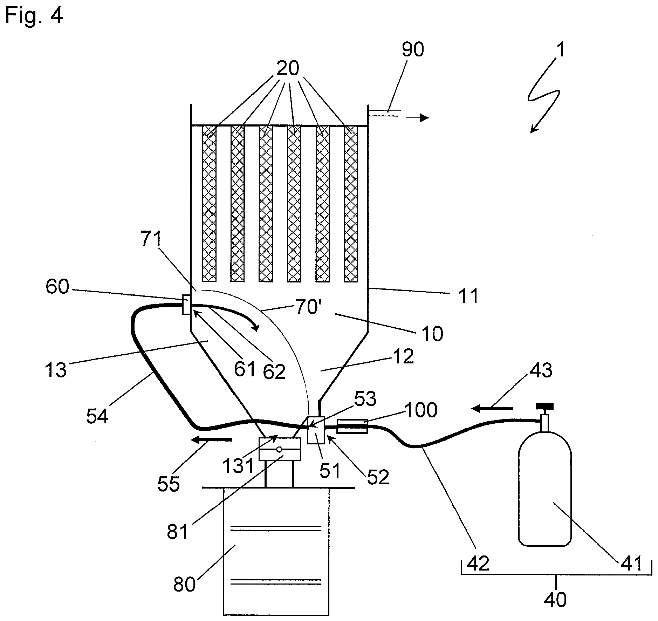

In Fig. 4 ist eine weitere Filtervorrichtung 1 gemäß dem zweiten Ausführungsbeispiel dargestellt, die sich von der in Fig. 3 gezeigten Filtervorrichtung hinsichtlich der Anordnung der Reinjektionsstelle 61 unterscheidet, die im Fall der in Fig. 4 dargestellten Situation weiter oben und damit näher an der Öffnung 71 angeordnet ist. Eine derartige Anordnung kann beispielsweise zweckmäßig sein, um die Fluidströmung an der Reinjektionsstelle möglichst so mittels der Trennwand 70' zu führen, dass die eintretende Fluidströmung nicht hart an der Trennwand 70' aufprallt und es zu möglichst geringer Verwirbelung des von der Fluidströmung transportierten Filterrückstands kommt.

### Drittes Ausführungsbeispiel

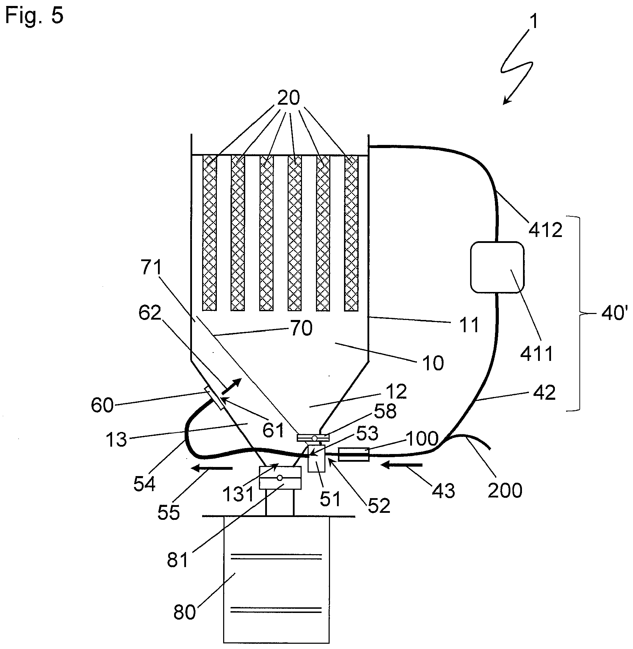

Die Filtervorrichtung 1 gemäß dem dritten Ausführungsbeispiel ist in Fig. 5 dargestellt.

Die Bestandteile und Eigenschaften der Filtervorrichtung 1 gemäß dem dritten Ausführungsbeispiel, die denjenigen der Filtervorrichtung 1 gemäß dem ersten Ausführungsbeispiel entsprechen, werden nachfolgend nicht gesondert beschrieben. Hinsichtlich der Gemeinsamkeiten wird auf die obenstehende Beschreibung zum ersten Ausführungsbeispiel verwiesen. Die nachfolgende Beschreibung ist auf die Unterschiede beschränkt. Einander entsprechende Komponenten der Filtervorrichtung 1 des ersten und des dritten Ausführungsbeispiels werden zudem mit gleichen Bezugszeichen bezeichnet. Alle diejenigen Bestandteile und Eigenschaften der Filtervorrichtung 1, die für das erste Ausführungsbeispiel als optionale Merkmale beschrieben sind, stellen auch für das dritte Ausführungsbeispiel optionale Merkmale dar.

Die Filtervorrichtung 1 gemäß dem dritten Ausführungsbeispiel unterscheidet sich von der Filtervorrichtung 1 gemäß dem ersten Ausführungsbeispiel hinsichtlich der Fluidströmungserzeugungsvorrichtung. Die Fluidströmungserzeugungsvorrichtung 40' gemäß dem dritten Ausführungsbeispiel umfasst kein Förderfluidreservoir. Anstatt dessen wird das Förderfluid der Filterkammer 10 entnommen. Der Filterkammer 10 wird zu diesem Zweck gefiltertes Prozessgas entnommen. Dies lässt sich beispielsweise realisieren, indem eine Prozessgasleitung 412 an einer Stelle an die Filterkammer 10 angeschlossen ist, an der das Prozessgas bereits durch das mindestens eine Filterelement 20 gefiltert worden ist. Das der Filterkammer 10 entnommene Prozessgas wird mittels einer Fluidtransportvorrichtung 411 durch die Förderfluidzuführleitung 42 in den Austrittsbereich 51 gefördert. Bei der Fluidtransportvorrichtung 411 kann es sich beispielsweise um ein Gebläse oder einen Verdichter handeln.

Wenn eine chemische Reaktion mit einem Passivierungsmittel erwünscht ist, kann die Fluidströmung mittels der Passivierungsmittelzufuhrvorrichtung 200 (in Fig. 1 nicht dargestellt) an einer geeigneten Stelle mit einem Passivierungsmittel versetzt werden. Die Passivierungsmittelzufuhrvorrichtung 200 kann beispielsweise ein Passivierungsmittelreservoir (in Fig. 5 nicht dargestellt) und eine Passivierungsmittelleitung zum Einleiten von Passivierungsmittel in die Fluidströmung umfassen. Die Einleitung kann dabei beispielsweise in die Prozessgasleitung 412 und/oder die Förderfluidzuführleitung 42 und/oder in den Austrittsbereich 51 und/oder in die Förderleitung 54 erfolgen.

### Viertes Ausführungsbeispiel

Das vierte Ausführungsbeispiel stellt eine Kombination des zweiten und dritten Ausführungsbeispiels dar. Die Filtervorrichtung 1 gemäß dem vierten Ausführungsbeispiel sind in den Zeichnungsfiguren nicht dargestellt.

Die Filtervorrichtung 1 gemäß dem vierten Ausführungsbeispiel unterscheidet sich von der Filtervorrichtung 1 gemäß dem dritten Ausführungsbeispiel darin, dass die Trennwand 70' eine gekrümmte Form aufweist, wie sie beispielhaft in den Figuren 3 und 4 für das zweite Ausführungsbeispiel dargestellt ist.

### Fünftes, sechstes, siebtes und achtes Ausführungsbeispiel

Die Filtervorrichtungen 1 gemäß dem fünften bis achten Ausführungsbeispiel sind in den Zeichnungsfiguren nicht dargestellt.

Abgesehen vom Austrittsbereich, der Förderfluidzuführung und dem Förderfluidausgang entspricht das fünfte dem ersten, das sechste dem zweiten, das siebte dem dritten und das achte dem vierten Ausführungsbeispiel. Die Bestandteile und Eigenschaften der Filtervorrichtung 1 gemäß dem fünften bis achten Ausführungsbeispiel, die denjenigen der Filtervorrichtung 1 gemäß dem ersten bis vierten Ausführungsbeispiel entsprechen, werden nachfolgend nicht gesondert beschrieben. Hinsichtlich der Gemeinsamkeiten wird auf die obenstehende Beschreibung zum ersten bis vierten Ausführungsbeispiel verwiesen. Die nachfolgende Beschreibung ist auf die Unterschiede beschränkt. Alle diejenigen Bestandteile und Eigenschaften der Filtervorrichtung 1, die für das erste bis vierte Ausführungsbeispiel als optionale Merkmale beschrieben sind, stellen auch für das fünfte bis achte Ausführungsbeispiel optionale Merkmale dar.

Gemäß dem fünften bis achten Ausführungsbeispiel sind der Austrittsbereich, die Förderfluidzuführung und der Förderfluidausgang als Venturidüse oder als Bestandteile einer Venturidüse ausgebildet. Die Ansaugung von Filterrückstand aus dem ersten Sammelbereich 12 erfolgt somit anders als im ersten bis vierten Ausführungsbeispiel nicht mittels eines Ejektors sondern mittels dieser Venturi-Düse.

In weiteren Ausführungsbeispielen werden anstelle oder zusätzlich zu einem Ejektor bzw. einer Venturidüse andere Vorrichtungen verwendet, um eine Ansaugung von Filterrückstand in die Fluidströmung zu bewirken.

### Neuntes Ausführungsbeispiel

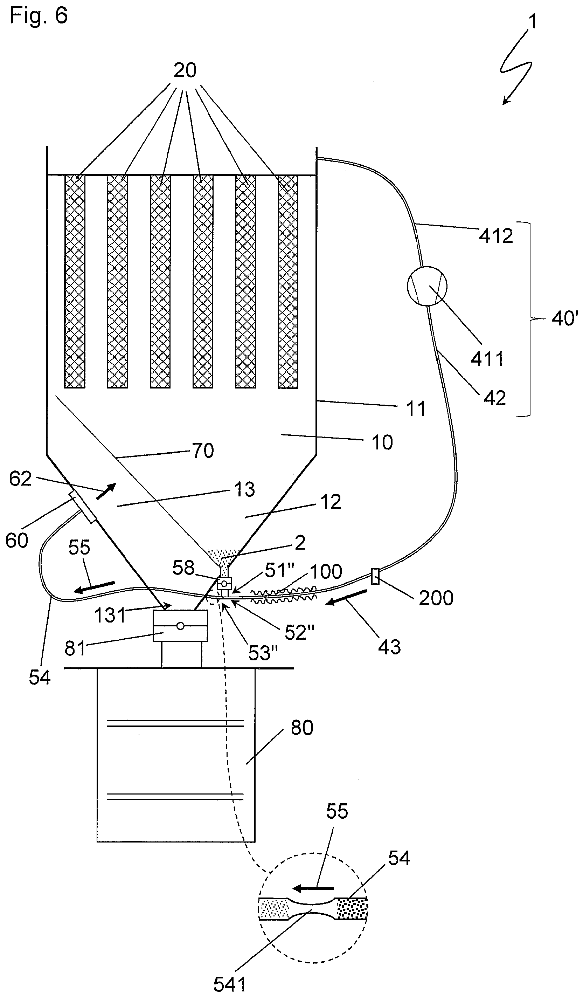

Die Filtervorrichtung 1 gemäß dem neunten Ausführungsbeispiel ist in Fig. 6 dargestellt.

Die Bestandteile und Eigenschaften der Filtervorrichtung 1 gemäß dem neunten Ausführungsbeispiel, die denjenigen der Filtervorrichtung 1 gemäß den vorstehend beschriebenen Ausführungsbeispielen entsprechen, werden nachfolgend nicht gesondert beschrieben. Hinsichtlich der Gemeinsamkeiten wird auf die obenstehende Beschreibung verwiesen. Die nachfolgende Beschreibung ist auf die Unterschiede beschränkt. Einander entsprechende Komponenten der Filtervorrichtung 1 des neunten Ausführungsbeispiels und der vorstehend beschriebenen Ausführungsbeispiele werden zudem mit gleichen Bezugszeichen bezeichnet. Alle diejenigen Bestandteile und Eigenschaften der Filtervorrichtung 1, die für die vorstehend beschriebenen Ausführungsbeispiele als optionale Merkmale beschrieben sind, stellen auch für das neunte Ausführungsbeispiel optionale Merkmale dar.

Die Filtervorrichtung 1 gemäß dem neunten Ausführungsbeispiel unterscheidet sich von der Filtervorrichtung 1 gemäß dem dritten Ausführungsbeispiel darin, dass in der Filtervorrichtung 1 gemäß dem neunten Ausführungsbeispiel der Austrittsbereich 51", die Förderfluidzuführung 42" und der Förderfluidausgang 53" nicht als Ejektor ausgebildet sind. Gemäß dem neunten Ausführungsbeispiel führt die auf den im ersten Sammelbereich 12 befindlichen Filterrückstand wirkende Schwerkraft dazu, dass dieser in den Austrittsbereich 51" gelangt und mittels der durch die Fluidströmungserzeugungsvorrichtung 40' erzeugten Fluidströmung durch die Förderleitung 54 in den zweiten Sammelbereich 13 gefördert wird.

Der Austrittsbereich 51" ist beispielsweise als Kammer ausgebildet, mit der die Förderfluidzuführleitung 42 und die Förderleitung 54 verbunden sind, sodass die Fluidströmung durch die Kammer hindurchgeführt werden kann. Die Verbindung mit der Förderfluidzuführung 42 bildet dann die Förderfluidzuführung 52" und die Verbindung mit der Förderleitung 54 den Förderfluidausgang 53". Die Kammer ist direkt oder indirekt über ein Rohr, eine Leitung, etc. mit einer Austrittsöffnung, durch die Filterrückstand aus dem ersten Sammelbereich 12 austreten kann, verbunden. Die Austrittsöffnung ist bevorzugt an der untersten Stelle des ersten Sammelbereichs 12 angeordnet.

In Fig. 6 ist dargestellt, dass sich Filterrückstand 2 im ersten Sammelbereich 12 befindet.

Auf eine derartige Kammer kann auch verzichtet werden, beispielsweise indem der Austrittsbereich 51" durch den Bereich gebildet wird, an dem Förderfluidzuführleitung 42 und die Förderleitung 54 aneinander treffen. Die Förderfluidzuführleitung 42 und die Förderleitung 54 können dabei verschiedene Komponenten sein, die im Austrittsbereich 51" miteinander verbunden sind. Es kann auch eine durchgehende Leitung vorgesehen sein, die stromaufwärts des Austrittsbereich 51" als Förderfluidzuführleitung 42 und stromaufwärts des Austrittsbereich 51" als Förderleitung 54 bezeichnet wird. Der Austrittsbereich 51" zeichnet sich jeweils dadurch aus, dass aus dem ersten Sammelbereich 12 austretender Filterrückstand zunächst in diesem Bereich in die Fördervorrichtung gelangt, bevor er durch die Förderleitung 54 gefördert wird.

Optional weist die Filtervorrichtung 1 eine zweite Absperrvorrichtung 58 auf, durch die der erste Sammelbereich 12 vom Austrittsbereich 51" abtrennbar ist. Bei der zweiten Absperrvorrichtung 58 kann es sich beispielsweise um eine Absperrklappe handeln. Die optionale zweite Absperrvorrichtung 58 verhindert im geschlossenen Zustand, dass Filterrückstand aus dem ersten Sammelbereich 12 in den Austrittsbereich 51" gelangt.

Optional umfasst die Förderleitung 54 eine Querschnittsverengung 541. Die Querschnittsverengung 541 ist in die im unteren Bereich der Fig. 6 dargestellte Vergrößerung des mit gestrichelter Linie eingekreisten Abschnitts der Förderleitung 54 zu erkennen. Die Querschnittsverengung 541 ist in Fig. 6 im Bereich des Förderfluidausgangs 53", d.h. knapp stromabwärts des Förderfluidausgangs 53" angeordnet. Die Querschnittsverengung 541 kann jedoch auch an anderer Stelle der Förderleitung 54 angeordnet sein. Die Förderleitung 54 kann auch mehrere Querschnittsverengungen aufweisen.

Durch die Querschnittsverengung 541 wird das durch die Förderleitung 54 strömende Fluid beschleunigt. Dadurch kann es beispielsweise zu einem Aufbrechen von Partikelagglomeraten, die im Filterrückstand enthalten sind, kommen. Dies ist in der in Fig. 6 dargestellten Vergrößerung dadurch symbolisiert, dass in der Förderleitung 54 stromaufwärts der Querschnittsverengung 541 größere Feststoffteilchen eingezeichnet sind als stromabwärts der Querschnittsverengung 541.

### Zehntes Ausführungsbeispiel

Die Filtervorrichtung 1 gemäß dem zehnten Ausführungsbeispiel sind in den Zeichnungsfiguren nicht dargestellt.

Die Filtervorrichtung 1 gemäß dem zehnten Ausführungsbeispiel unterscheidet sich von der Filtervorrichtung 1 gemäß dem neunten Ausführungsbeispiel darin, dass die Trennwand 70' eine gekrümmt Form mit einer gekrümmten Schnittkontur aufweist, wie sie beispielhaft in den Figuren 3 und 4 für das zweite Ausführungsbeispiel dargestellt ist.

### Elftes Ausführungsbeispiel

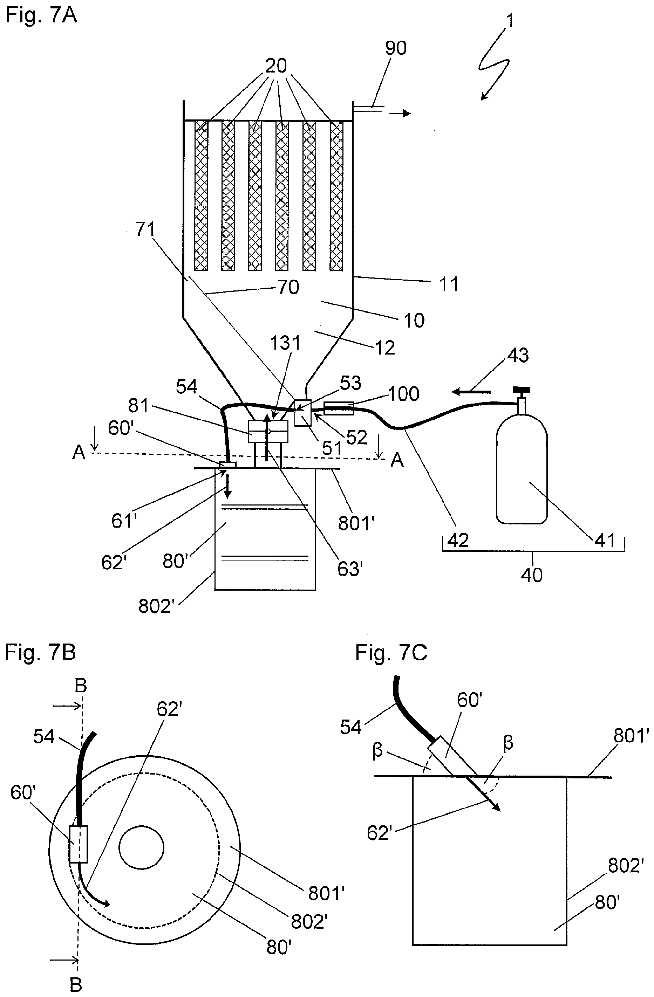

Die Filtervorrichtung 1 gemäß dem elften Ausführungsbeispiel ist in Fig. 7A dargestellt.

Die Bestandteile und Eigenschaften der Filtervorrichtung 1 gemäß dem elften Ausführungsbeispiel, die denjenigen der Filtervorrichtung 1 gemäß dem ersten Ausführungsbeispiel entsprechen, werden nachfolgend nicht gesondert beschrieben. Hinsichtlich der Gemeinsamkeiten wird auf die obenstehende Beschreibung zum ersten Ausführungsbeispiel verwiesen. Die nachfolgende Beschreibung ist auf die Unterschiede beschränkt. Einander entsprechende Komponenten der Filtervorrichtung 1 des ersten und des elften Ausführungsbeispiels werden zudem mit gleichen Bezugszeichen bezeichnet. Alle diejenigen Bestandteile und Eigenschaften der Filtervorrichtung 1, die für das erste Ausführungsbeispiel als optionale Merkmale beschrieben sind, stellen auch für das elfte Ausführungsbeispiel optionale Merkmale dar.

Die Filtervorrichtung 1 gemäß dem elften Ausführungsbeispiel unterscheidet sich von der Filtervorrichtung 1 gemäß dem ersten Ausführungsbeispiel darin, dass die Fördervorrichtung gemäß dem elften Ausführungsbeispiel dafür sorgt, dass der Filterrückstand aus der Filterkammer 10 entnommen und in einen Auffangbehälter 80' gefördert wird. Dazu ist die Förderleitung 54 mit dem Inneren des Auffangbehälters 80' verbunden. Optional ist die Förderleitung mittels eines Befestigungselements 60' am Auffangbehälter 80' angeschlossen, bevorzugt an dessen Oberseite, die als Andockplatte 801' zum Andocken des Auffangbehälters 80' an die Filterkammer 10 ausgebildet sein kann. Zusätzlich zu der Fluidverbindung mit dem Austrittsbereich 51 über die Förderleitung 54 besteht eine weitere Fluidverbindung mit dem Inneren der Filterkammer 10. Durch diese weitere Fluidverbindung kann das in den Auffangbehälter 80' eingeleitete Förderfluid in die Filterkammer 10 strömen. Diese Strömung ist in Fig. 7A durch den Pfeil 63' symbolisiert. Im Fall des elften Ausführungsbeispiels ist der Bereich 13', in dem das Fluid durch diese weitere Fluidverbindung eintritt, durch eine Trennwand 70 von der restlichen Filterkammer 10 bereichsweise abgetrennt, sodass an der Oberseite der Trennwand 70 eine Öffnung 71 angeordnet ist. Dieser Bereich 13' kann hinsichtlich seiner Anordnung und teilweisen Abtrennung von der übrigen Filterkammer 10 dem zweiten Sammelbereich 13 des ersten Ausführungsbeispiels entsprechen, wobei die direkte oder indirekte Kopplung zwischen der Filterkammer 10 und dem Auffangbehälter 80' gemäß dem elften Ausführungsbeispiel die Fluidverbindung für die Fluidströmung aus dem Auffangbehälter 80' in die Filterkammer, d.h. die durch den Pfeil 63' symbolisierte Strömung, bereitstellt. Im Bereich dieser Kopplung kann eine Sperrvorrichtung 81' vorgesehen ist. Im Betrieb ist die Sperrvorrichtung 81' geöffnet, wenn Fluid durch die Förderleitung 54 in den Auffangbehälter 80' gelangt, damit dieses entweichen kann. Die Trennwand 70 ist bevorzugt so angeordnet, dass das aus dem Auffangbehälter in den Bereich 13' strömende Fluid gegen die Trennwand 70 strömt und mit dem Fluid mitgeführte Partikel zumindest teilweise im Bereich 13' zurückgehalten werden. Da sich diese Partikel im Bereich 13' sammeln sollen, wird dieser Bereich 13' ebenfalls als "zweiter Sammelbereich" bezeichnet.

Der Auffangbehälter 80' ist bevorzugt an die Filterkammer 10 direkt oder indirekt gekoppelt, und dabei insbesondere mit einer Öffnung 131 im unteren Bereich des zweiten Sammelbereichs 13' verbunden.

Der Auffangbehälter 80' dient bevorzugt zusätzlich als Abfallbehälter 80.

Partikel, die von dem aus dem Auffangbehälter 80' in die Filterkammer 10 strömenden Fluid mitgerissen worden sind und sich im zweiten Sammelbereich 13' angesammelt haben, können in den Auffangbehälter 80' transportiert werden, insbesondere durch die Öffnung 131 zu einem Zeitpunkt, zu dem kein Fluid aus dem Auffangbehälter 80' in die Filterkammer 10 strömt. Dieser Transport kann beispielsweise mittels Schwerkraft erfolgen.

Bevorzugt wird die Fluidströmung so in den Auffangbehälter 80' eingeleitet, dass eine möglichst effektive Trennung des Fluids und des von diesem mitgeführten Filterrückstands erfolgt und dass möglichst wenig von dem im Auffangbehälter 80' bereits befindlichen Filterrückstand aufgewirbelt wird. Insbesondere im Fall eines zylindrischen Auffangbehälters 80' wird die Fluidströmung in einer Richtung in den Auffangbehälter eingeleitet, deren horizontale Komponente der Tangentialrichtung der Seitenwand 802' des Auffangbehälters 80' entspricht. Dadurch kann beispielsweise erreicht werden, dass das Fluid möglichst gut an der Seitenwand 802' entlangfließt und nicht durch ein heftiges Auftreffen an der Seitenwand 802' verwirbelt wird. Alternativ weicht die horizontale Komponente maximal 30°, bevorzugt maximal 20°, mehr bevorzugt maximal 10° von der Tangentialrichtung ab. Bevorzugt ist zusätzlich die Vertikalkomponente dieser Richtung flach, wobei der Winkel β zwischen dieser Richtung und der Horizontalen mehr bevorzugt maximal 45°, noch mehr bevorzugt maximal 30°, am meisten bevorzugt maximal 15° beträgt.

Durch diese spezielle Ausrichtung der in den Auffangbehälter 80' einströmenden Fluidströmung kann vorzugsweise ein Strömungsregime bestehen, das demjenigen in einem Zyklonabscheider ähnelt.

Eine Konfiguration für eine konkrete bevorzugte Ausrichtung der in den Auffangbehälter 80' einströmenden Fluidströmung ist in den Figuren 7B und 7C dargestellt.

Fig. 7B zeigt die unterhalb der in Fig. 7A eingezeichneten Schnittebene A-A liegenden Komponenten in Draufsicht. Es ist zu erkennen, dass die Förderleitung 54 bzw. das Befestigungselement 60' so angeordnet ist, dass die Fluidströmung (durch den Pfeil 62' symbolisiert) tangential zur Seitenwand 802' des Auffangbehälters 80' eintritt und von der Seitenwand 802' geführt wird.

Fig. 7C zeigt eine vertikale Schnittdarstellung entsprechend der in Fig. 7B eingezeichneten Schnittebene B-B. Es ist zu erkennen, dass die Förderleitung 54 bzw. das Befestigungselement 60' so angeordnet sind, dass die Fluidströmung (durch den Pfeil 62' symbolisiert) mit einem Winkel β von ca. 45° eintritt. Dieser Winkel von 45° ist jedoch beispielhaft. Bevorzugt wird ein Winkel von unter 45° gewählt.

Durch die beschriebene bevorzugte Ausgestaltung kann sich beispielsweise möglichst viel Filterrückstand rasch im Auffangbehälter absetzen, sodass er nicht nach oben zur Filterkammer ausgetragen wird. Dazu ist es weiter vorteilhaft, wenn die Verbindung zwischen Filterkammer und Auffangbehälter einen großen Durchmesser hat und hier eine langsame Strömungsgeschwindigkeit herrscht. Ferner können die Partikel des Filterrückstands optional aktiv gebremst werden, beispielsweise durch eine eng an einer Wandung des Auffangbehälters geführten Strömung. Partikel kollidieren dann nach einer nicht einschränkenden Theorie mit der Wand oder werden in der Grenzschicht zur Wand gebremst und setzen sich am Boden ab. Alternativ könnte die Förderung gepulst werden, um dem Filterrückstand zwischendurch Zeit zu geben, sich möglichst im Behälter abzusetzen. Bei den Pulsen könnte es sich beispielsweise um Strömungspulse mit einer Frequenz von 3 Sekunden kandeln.

Im Betrieb ist eine optionale Sperrvorrichtung 81' zwischen Filterkammer 10 und Auffangbehälter 80' geöffnet. Das durch die Fluidströmung aus dem Auffangbehälter verdrängte Gas bewegt sich dann durch die geöffnete Sperrvorrichtung 81' nach oben in die Filterkammer, wobei das Filterelement Partikel filtert und das gereinigte Gas durch den vorhandenen Auslass entweichen kann. Ein zusätzliches Filter ist daher nicht erforderlich.

### Zwölftes Ausführungsbeispiel

Das zwölfte Ausführungsbeispiel entspricht weitgehend dem elften Ausführungsbeispiel, wobei gemäß dem zwölften Ausführungsbeispiel eine gekrümmte Trennwand 70' vorgesehen ist, wie obenstehend für das zweite Ausführungsbeispiel beschrieben.

### 13. Ausführungsbeispiel

Das 13. Ausführungsbeispiel entspricht weitgehend dem elften Ausführungsbeispiel, wobei gemäß dem 13. Ausführungsbeispiel die Fluidströmungserzeugungsvorrichtung 40' kein Förderfluidreservoir umfasst. Anstatt dessen wird das Förderfluid der Filterkammer 10 entnommen, wie obenstehend für das dritte Ausführungsbeispiel beschrieben.

### 14. Ausführungsbeispiel

Das 14. Ausführungsbeispiel entspricht weitgehend dem 13. Ausführungsbeispiel, wobei gemäß dem 14. Ausführungsbeispiel eine gekrümmte Trennwand 70' vorgesehen ist, wie obenstehend für das zweite bzw. vierte Ausführungsbeispiel beschrieben.

### 15. bis 18. Ausführungsbeispiel

Die Ausführungsbeispiele 15 bis 18 entsprechen weitgehend den Ausführungsbeispielen 11 bis 14. Gemäß den Ausführungsbeispielen 15 bis 18 sind der Austrittsbereich, die Förderfluidzuführung und der Förderfluidausgang als Venturidüse oder als Bestandteile einer Venturidüse ausgebildet.

### 19. und 20. Ausführungsbeispiel

Die Ausführungsbeispiele 19 und 20 entsprechen weitgehend dem 13. Ausführungsbeispiel. Die Filtervorrichtung 1 gemäß den Ausführungsbeispielen 19 und 20 unterscheidet sich von der Filtervorrichtung 1 gemäß dem 13. Ausführungsbeispiel darin, dass in der Filtervorrichtung 1 gemäß den Ausführungsbeispiel 19 und 20 der Austrittsbereich 51", die Förderfluidzuführung 42" und der Förderfluidausgang 53" nicht als Ejektor ausgebildet sind sondern so wie obenstehend für das dritte Ausführungsbeispiel beschrieben. Die Filtervorrichtung 1 gemäß dem 20. Ausführungsbeispiel weist zudem eine Trennwand mit gekrümmter Form auf, wie obenstehend für das zweite Ausführungsbeispiel beschrieben.

### 21. bis 40. Ausführungsbeispiel

Die Filtervorrichtungen 1 gemäß den Ausführungsbeispielen 21 bis 40 sind in den Zeichnungsfiguren nicht dargestellt.

Abgesehen von den nachfolgend beschrieben Unterschieden entsprechen das 21. bis 40. Ausführungsbeispiel dem ersten bis 20. Ausführungsbeispiel. Die Bestandteile und Eigenschaften der Filtervorrichtung 1 gemäß dem 21. bis 40. Ausführungsbeispiel, die denjenigen der Filtervorrichtung 1 gemäß dem ersten bis 20. Ausführungsbeispiel entsprechen, werden nachfolgend nicht gesondert beschrieben. Hinsichtlich der Gemeinsamkeiten wird auf die obenstehende Beschreibung zum ersten bis 20. Ausführungsbeispiel verwiesen. Die nachfolgende Beschreibung ist auf die Unterschiede beschränkt. Alle diejenigen Bestandteile und Eigenschaften der Filtervorrichtung 1, die für das erste bis 20. Ausführungsbeispiel als optionale Merkmale beschrieben sind, stellen auch für das 21. bis 40. Ausführungsbeispiel optionale Merkmale dar.

Gemäß dem 21. bis 40. Ausführungsbeispiel sind der erste Sammelbereich 12 und der zweite Sammelbereich 13 bzw. der übrige Innenraum der Filterkammer 10 durch die Trennwand 70 vollständig oder zumindest im Wesentlichen vollständig voneinander abgetrennt, sodass kein oder im Wesentlichen kein Fluid vom zweiten Sammelbereich 13 in den ersten Sammelbereich bzw. den übrigen Innenraum der Filterkammer 10 strömen kann. Dadurch kann beispielsweise vermieden werden, dass sich Förderfluid und ein etwaiges Passivierungsmittel mit dem durch die Filterkammer 10 strömenden Prozessgas vermischen. Beispielsweise kann es unerwünscht sein, dass Passivierungsmittel wie Sauerstoff in den Prozessgaskreislauf und somit in die Prozesskammer gelangt.

Wenn der zweite Sammelbereich 13 vom ersten Sammelbereich 12 bzw. dem übrigen Innenraum der Filterkammer 10 abgetrennt ist, ist bevorzugt ein Förderfluidauslass vorgesehen, sodass das durch die Förderleitung 54 in den zweiten Sammelbereich 13 eintretende Förderfluid wieder austreten kann. Alternativ kann das Förderfluid auch durch den Ausgang, der für die Entnahme des Filterrückstands aus dem zweiten Sammelbereich 13 vorgesehen ist, abgeführt werden.

### Weitere Ausführungsbeispiele der erfindungsgemäßen Filtervorrichtung

Weitere Ausführungsbeispiele ergeben sich beispielsweise dadurch, dass die konkret im Zusammenhang mit dem neunten Ausführungsbeispiel beschriebene Querschnittsverengung 541 in der Filtervorrichtung 1 eines anderen Ausführungsbeispiels implementiert wird.

Weitere Ausführungsbeispiele ergeben sich beispielsweise dadurch, dass in den vorstehend beschriebenen Ausführungsbeispielen im Bereich des Ausgangs des ersten Sammelbereichs 12, durch den Filterrückstand in den Austrittsbereich 51, 51" gelangt, ein Filterrückstandförderer vorgesehen ist, um den Transport des Filterrückstands in den Austrittsbereich 51, 51" zu bewirken oder zu forcieren. Ein Filterrückstandförderer kann dabei insbesondere in den Ausführungsbeispielen vorteilhaft sein, in denen von der Fördervorrichtung kein oder kein hoher Ansaugdruck erzeugt wird.

Weitere Ausführungsbeispiele ergeben sich beispielsweise dadurch, dass in den vorstehend beschriebenen Ausführungsbeispielen der zweite Sammelbereich 13 vom ersten Sammelbereich 12 und der übrigen Filterkammer 10 durch die Trennwand 70, 70' vollständig getrennt ist. In diesem Fall verfügt der zweite Sammelbereich 13 bevorzugt über einen Fluidauslass, durch den Förderfluid austreten kann. Dieses aus dem zweiten Sammelbereich 13 austretende Förderfluid kann vor seiner Entsorgung oder Wiederverwendung mit einem separaten Filter gereinigt werden. Die vollständige Abtrennung des zweiten Sammelbereichs 13 kann in bestimmten Situationen vorteilhaft sein, beispielsweise wenn verhindert werden soll, dass Förderfluid in den Bereich der Filterelemente gelangt und sich mit dem Prozessgas vermischen kann.

Weitere Ausführungsbeispiele ergeben sich beispielsweise dadurch, dass in der Filterkammer lediglich ein Sammelbereich anstelle des ersten und des zweiten Sammelbereichs vorgesehen ist. In diesem Fall gelangt der Filterrückstand infolge der internen Rückführung in denselben Bereich, in den der durch Ablösung vom mindestens einen Filterelement gelangt ist und aus dem der durch die interne Rückführung entnommen worden ist.

### Ausführungsbeispiele der erfindungsgemäßen Vorrichtung zur additiven Herstellung dreidimensionaler Objekte

Ausführungsbeispiele der erfindungsgemäßen Vorrichtung zur additiven Herstellung dreidimensionaler Objekte handelt es sich ergeben sich indem eine Vorrichtung zur additiven Herstellung (z.B. eine Lasersinteranlage) mit einer Prozesskammer und einer Prozessgasfördervorrichtung mit der erfindungsgemäßen Filtervorrichtung gemäß einem der obenstehenden Ausführungsbeispiele ausgestattet werden, sodass die Filtervorrichtung einen Teil der Vorrichtung zur additiven Herstellung dreidimensionaler Objekte darstellt.

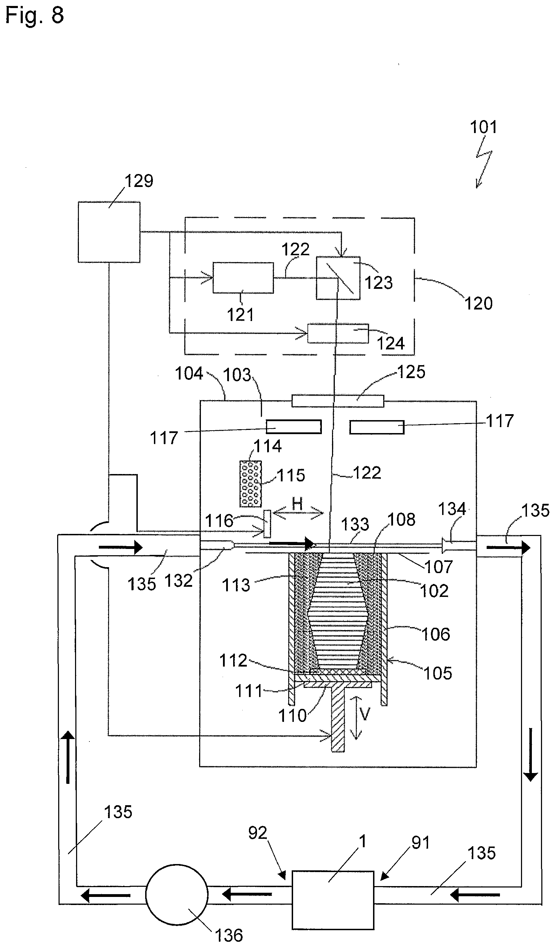

Die in Fig. 8 beispielhaft dargestellte Vorrichtung gemäß einem Ausführungsbeispiel ist eine Lasersinter- oder Laserschmelzvorrichtung 101. Zum Aufbauen eines Objekts 102 enthält sie eine Prozesskammer 103 mit einer Kammerwandung 104.

In der Prozesskammer 103 ist ein nach oben offener Behälter 105 mit einer Behälterwandung 106 angeordnet. Durch die obere Öffnung des Behälters 105 ist eine Arbeitsebene 107 definiert, wobei der innerhalb der Öffnung liegende Bereich der Arbeitsebene 107, der zum Aufbau des Objekts 102 verwendet werden kann, als Baufeld 108 bezeichnet wird.

In dem Behälter 105 ist ein in einer vertikalen Richtung V bewegbarer Träger 110 angeordnet, an dem eine Grundplatte 111 angebracht ist, die den Behälter 105 nach unten abschließt und damit dessen Boden bildet. Die Grundplatte 111 kann eine getrennt von dem Träger 110 gebildete Platte sein, die an dem Träger 110 befestigt ist, oder sie kann integral mit dem Träger 110 gebildet sein. Je nach verwendetem Pulver und Prozess kann auf der Grundplatte 111 noch eine Bauplattform 112 als Bauunterlage angebracht sein, auf der das Objekt 102 aufgebaut wird. Das Objekt 102 kann aber auch auf der Grundplatte 111 selber aufgebaut werden, die dann als Bauunterlage dient. In Fig. 8 ist das in dem Behälter 105 auf der Bauplattform 112 zu bildende Objekt 102 unterhalb der Arbeitsebene 107 in einem Zwischenzustand dargestellt mit mehreren verfestigten Schichten, umgeben von unverfestigt gebliebenem Aufbaumaterial 113.

Die Lasersintervorrichtung 101 enthält weiter einen Vorratsbehälter 114 für ein durch elektromagnetische Strahlung verfestigbares pulverförmiges Aufbaumaterial 115 und einen in einer horizontalen Richtung H bewegbaren Beschichter 116 zum Aufbringen des Aufbaumaterials 115 innerhalb des Baufelds 108. Vorzugsweise erstreckt sich der Beschichter 116 quer zu seiner Bewegungsrichtung über den ganzen zu beschichtenden Bereich.

Optional ist in der Prozesskammer 103 eine Strahlungsheizung 117 angeordnet, die zum Beheizen des aufgebrachten Aufbaumaterials 115 dient. Als Strahlungsheizung 117 kann beispielsweise ein Infrarotstrahler vorgesehen sein.

Die Lasersintervorrichtung 101 enthält ferner eine Belichtungsvorrichtung 120 mit einem Laser 121, der einen Laserstrahl 122 erzeugt, der über eine Umlenkvorrichtung 123 umgelenkt und durch eine Fokussiervorrichtung 124 über ein Einkoppelfenster 125, das an der Oberseite der Prozesskammer 103 in der Kammerwandung 104 angebracht ist, auf die Arbeitsebene 107 fokussiert wird.

Weiter enthält die Lasersintervorrichtung 101 eine Steuereinheit 129, über die die einzelnen Bestandteile der Vorrichtung 101 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 110 um eine Höhe abgesenkt, die der gewünschten Schichtdicke entspricht. Der Beschichter 116 fährt zunächst zu dem Vorratsbehälter 114 und nimmt aus ihm eine zum Aufbringen einer Schicht ausreichende Menge des Aufbaumaterials 115 auf. Dann fährt er über das Baufeld 108, bringt dort pulverförmiges Aufbaumaterials 115 auf die Bauunterlage oder eine bereits vorher vorhandene Pulverschicht auf und zieht es zu einer Pulverschicht aus. Das Aufbringen erfolgt zumindest über den gesamten Querschnitt des herzustellenden Objekts 102, vorzugsweise über das gesamte Baufeld 108, also den durch die Behälterwandung 106 begrenzten Bereich. Optional wird das pulverförmige Aufbaumaterial 115 mittels einer Strahlungsheizung 117 auf eine Arbeitstemperatur aufgeheizt.

Anschließend wird der Querschnitt des herzustellenden Objekts 102 von dem Laserstrahl 122 abgetastet, sodass das pulverförmige Aufbaumaterial 115 an den Stellen verfestigt wird, die dem Querschnitt des herzustellenden Objekts 102 entsprechen. Dabei werden die Pulverkörner an diesen Stellen mittels der durch die Strahlung eingebrachten Energie teilweise oder vollständig aufgeschmolzen, so dass sie nach einer Abkühlung miteinander verbunden als Festkörper vorliegen. Diese Schritte werden solange wiederholt, bis das Objekt 102 fertiggestellt ist und der Prozesskammer 103 entnommen werden kann. Es können auch mehrere dreidimensionale Objekte 102 gleichzeitig auf die beschriebene Weise hergestellt werden.

In der Prozesskammer 103 erfolgt die additive Herstellung. Die Prozessgasfördervorrichtung 136, bei der es sich beispielsweise um ein Gebläse handelt, dient zum Fördern eines die Prozesskammer 103 von einem Prozesskammereingang 132 zu einem Prozesskammerausgang 134 durchströmenden Prozessgases. Die Strömung des Prozessgases durch die Prozesskammer 103 ist in Fig. 8 schematisch eingezeichnet und mit dem Bezugszeichen 133 versehen. Bevorzugt wird das Prozessgas dabei zumindest teilweise im Kreislauf geführt, das heißt das zumindest ein Teil des durch den Prozesskammerausgang 134 strömenden Prozessgases nach dessen Filterung durch die Filtervorrichtung 1 der Prozesskammer 103 durch den Prozesskammereingang 132 wieder zugeführt wird. In Fig. 8 ist ein derartiger Prozessgaskreislauf dargestellt, wobei die Strömungsrichtung durch Pfeile symbolisiert ist.

Die Prozesskammer 103 ist so mit der Filtervorrichtung 1 verbunden, dass aus der Prozesskammer 103 durch den Prozesskammerausgang 134 austretendes Prozessgas in einen Prozessgaseinlass 91 der Filtervorrichtung 1 geleitet wird. Dazu ist beispielsweise eine Leitung 135 vorgesehen. Im Fall einer Kreislaufführung des Prozessgases ist ferner ein Prozessgasauslass 92 der Filterkammer 10 mit dem Prozesskammereingang 132 verbunden. Dazu ist beispielsweise eine Leitung 135 vorgesehen. Eine Prozessgasfördervorrichtung 136 kann beispielsweise zwischen Prozessgasauslass 92 und dem Prozesskammereingang 132 und/oder zwischen Prozesskammerausgang 134 und dem Prozessgaseinlass 91 vorgesehen sein.

Alternativ zur beschrieben Leitung 135 oder eines Abschnitts derselben können Prozesskammer 103 und Filterkammer 10 so miteinander verbunden sein, dass der Prozesskammerausgang 134 direkt mit dem Prozessgaseinlass 91 der Filtervorrichtung 1 und/oder dass der Prozesskammereingang 132 direkt mit dem Prozessgasauslass 92 der Filtervorrichtung verbunden ist.

Prozessgas wird vor dem Filtern allgemein auch als "Rohgas" bezeichnet, während Prozessgas nach dem Filtern allgemein auch als "Reingas" bezeichnet wird. Das heißt Rohgas strömt im Betrieb aus dem Prozesskammerausgang 134 in den Prozessgaseinlass 91 der Filtervorrichtung.

Auch wenn die Ausführungsbeispiele der Vorrichtung zur additiven Herstellung anhand einer Lasersinter- bzw. Laserschmelzvorrichtung beschrieben wurden, sind sie nicht auf das Lasersintern oder Laserschmelzen eingeschränkt. Sie kann auf beliebige Verfahren zum generativen Herstellen eines dreidimensionalen Objekts durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Als Aufbaumaterial können verschiedene Arten von Pulver verwendet werden, insbesondere Metallpulver, Kunststoffpulver, Keramikpulver, Sand, gefüllte oder gemischte Pulver. Bevorzugt ist die Verwendung der erfindungsgemäßen Vorrichtung zur Additiven Herstellung mit Metallpulver als Aufbaumaterial, insbesondere mit einem Metallpulver, das zur Bildung von Kondensaten neigt, wie beispielsweise Titanpulver bzw. titanhaltiges Pulver.

Im Betrieb der erfindungsgemäßen Filtervorrichtung 1 gemäß einem der vorstehend beschriebenen Ausführungsbeispiele wird beispielsweise das erfindungsgemäße Verfahren durchgeführt.

Nachfolgend ist wird insbesondere der Betrieb der erfindungsgemäßen Filtervorrichtung gemäß dem ersten Ausführungsbeispiel beschrieben. Der Betrieb der Filtervorrichtungen gemäß dem anderen Ausführungsbeispielen erfolgt auf analoge Weise.

Ein Prozessgas wird durch mindestens ein in einer Filterkammer 10 der Filtervorrichtung 1 angeordnetes Filterelement 20 geleitet, wobei das Prozessgas gefiltert, d.h. von mitgeführten Feststoffen zumindest teilweise gereinigt wird. Dazu wird das Prozessgas über einen Prozessgaseinlass in die Filterkammer 10 eingelassen und über einen Prozessgasauslass die Filterkammer wieder ausgelassen, wobei es seinen Weg über das mindestens eine Filterelement 20 nimmt, bzw. bei mehreren Filterelementen über mindestens eines davon. Bei dem Prozessgas kann es insbesondere um das Prozessgas einer Vorrichtung zur additiven Herstellung dreidimensionaler Objekte wie etwa einer Anlage zum selektiven Lasersintern handeln.

Die herausgefilterten Feststoffe bleiben zumindest vorerst am mindestens einen Filterelement 20 zurück. Die zurückgehaltenen Feststoffe werden allgemein auch als "Filterrückstand" bezeichnet.

Der Filterrückstand löst sich entweder von selbst vom mindestens einen Filterelement 20 ab oder er wird durch eine geeignete Maßnahme abgelöst. Zum Ablösen kann beispielsweise von Zeit zu Zeit ein Druckgasstoß durch das mindestens eine Filterelement 20 geleitet werden, dessen Strömungsrichtung der Richtung entgegengesetzt ist, in der das Prozessgas zum Filtern durch das mindestens eine Filterelement strömt. Die Ablösung kann auch durch Abblasen, Abkehren, Abkratzen, Abschütteln etc. erfolgen. Auch eine Kombination mehrerer Techniken zum Ablösen ist möglich.

Das Filtern des Prozessgases wird optional während des Ablösens und/oder während der nachfolgend beschriebenen Rezirkulation des Filterrückstands unterbrochen. Alternativ kann das Filtern des Prozessgases fortgesetzt werden, wenn dies die verwendete Technik zum Ablösen zulässt. Eine weitere Möglichkeit besteht darin, dass mehrere Filterelemente vorgesehen sind und das Filtern des Prozessgases mit einem Teil der Filterelemente fortgesetzt wird, während ein anderer Teil abgereinigt wird. Zudem ist es möglich, dass mehrere Filterkammern bzw. mehrere Filtervorrichtungen vorgesehen sind, sodass das Filtern mit einem Teil der Filterkammern bzw. der Filtervorrichtungen fortgesetzt werden kann, während in einem anderen Teil der Filterkammern bzw. der Filtervorrichtungen eine Abreinigung und/oder eine Rezirkulation stattfindet.

Der Filterrückstand, welcher sich vom mindestens einen Filterelement abgelöst hat oder welcher von diesem abgelöst wurde, gelangt in den ersten Sammelbereich 12, etwa indem er in diesen hineinfällt. der vom mindestens einen Filterelement abgelöst wird oder sich von diesem ablöst, aufzunehmen. Das heißt, dass dieser Filterrückstand im einfachsten Fall in diesen Bereich fällt.

In der Filtervorrichtung 1 wird mittels einer Fluidströmungserzeugungsvorrichtung 40 eine Fluidströmung erzeugt.

Im Fall der Filtervorrichtung 1 gemäß dem ersten Ausführungsbeispiel erfolgt die Erzeugung der Fluidströmung mittels eines Förderfluidreservoirs 41 und einer Förderfluidzuführleitung 42. Das Förderfluidreservoir 41 stellt einen Vorrat an Förderfluid bereit. Die Menge des Förderfluids, das pro Zeiteinheit durch die Förderfluidzuführleitung 42 strömt, wird optional durch eine Reguliervorrichtung (in Fig. 1 nicht dargestellt) eingestellt und/oder geregelt.

Wenn das Förderfluidreservoir 41 das Förderfluid nicht in der benötigten Menge und mit dem benötigten Druck bereitstellt, können mittels einer geeigneten Vorrichtung der Druck und die Fließmenge des Förderfluids erhöht oder erniedrigt, insbesondere eingestellt und/oder geregelt werde.

Zumindest ein Teil des Filterrückstands wird dem ersten Sammelbereich 12 entnommen. Dies erfolgt in der Filtervorrichtung gemäß dem ersten Ausführungsbeispiel, indem am Ausgang des ersten Sammelbereichs 12 der Austrittsbereich 51 der Fördervorrichtung 50 angeschlossen ist. Das Förderfluid wird durch die Förderfluidzuführung 52 in den Austrittsbereich 51 einströmen gelassen. Dazu ist die Förderfluidzuführung 52 mit der Förderfluidzuführleitung 42 verbunden. Durch den Förderfluidausgang 53 strömt das Förderfluid wieder aus dem Austrittsbereich 51 heraus, wobei Filterrückstand und weiteres Fluid, die aus dem ersten Sammelbereich 12 in den Austrittsbereich 51 gelangen, mit dem Förderfluid aus dem Austrittsbereich 51 gefördert werden. Das aus dem Förderfluidausgang 53 strömende Fluid strömt in eine Förderleitung 54, deren erstes Ende mit dem Förderfluidausgang 53 verbunden ist.

Wenn Förderfluid durch die Förderfluidzuführung 52 strömt, wird das Förderfluid durch eine Düse beschleunigt und dadurch ein Ansaugdruck erzeugt, durch den Filterrückstand und gegebenenfalls im ersten Sammelbereich 12 befindliches Fluid in den Austrittsbereich 51 gesaugt werden. Der aus dem ersten Sammelbereich 12 angesaugte Filterrückstand und das gegebenenfalls aus dem ersten Sammelbereich 12 angesaugte Fluid werden durch den Förderfluidausgang 53 aus dem Austrittsbereich 51 ausgestoßen.

Das Förderfluid und der angesaugte Filterrückstand sowie das ggf. gemeinsam mit diesem aus der Filterkammer gesaugte Fluid strömen weiter durch die Förderleitung 54 und treten an einer Reinjektionsstelle 61 in die Filterkammer 11 ein.

Auf diese Weise erfolgt ein zumindest teilweises Fördern des Filterrückstands in der Fluidströmung bzw. mittels der Fluidströmung zurück in die Filterkammer 10.

Das Fluid tritt dabei in einen zweiten Sammelbereich 13 ein. Der zweite Sammelbereich 13 ist vom ersten Sammelbereich 12 durch eine Trennwand 70 getrennt, wobei die Trennwand 70 keine vollständige Abtrennung zwischen dem ersten Sammelbereich 12 und dem zweiten Sammelbereich 13 schafft, sondern eine lediglich bereichsweise Abtrennung, bei der zwischen dem oberen Bereich der Trennwand 70 und der Filterkammerwandung 11 eine Öffnung 71 vorliegt, durch die eine Fluidverbindung zwischen dem zweiten Sammelbereich 13 und dem ersten Sammelbereich 12 und/oder dem mindestens einen Filterelement 20 besteht. Da im Zuge der Rezirkulation Fluid in den zweiten Sammelbereich 13 strömt, tritt Fluid durch die Öffnung wieder aus. Der Filterrückstand verbleibt allerdings zumindest teilweise im zweiten Sammelbereich 13.

Bevorzugt wird das an der Reinjektionsstelle eintretende Fluid gegen die Trennwand 70 strömen gelassen, insbesondere so, dass dadurch die vom Fluid mitgeführten Partikel auf die Trennwand 70 prallen.

Optional wird der Filterrückstand durch den Ausgang 131 aus dem zweiten Sammelbereich 13 entfernt und in einen Abfallbehälter 80 transferiert.

Optional wird der Filterrückstand zumindest teilweise chemisch umgesetzt, indem es mit einem Passivierungsmittel reagiert. Das Passivierungsmittel kann beispielsweise dem Förderfluid zugesetzt werden, bevor, nachdem oder während das Ansaugen des Filterrückstands aus dem ersten Sammelbereich 12 erfolgt. Das Passivierungsmittel kann in dem im Förderfluidreservoir bereitgehaltenen Förderfluid auch bereits enthalten sein.

Optional wird die Fluidströmung und/oder das Passivierungsmittel mittels einer Energiezufuhrvorrichtung 100 mit Energie beaufschlagt.

Bevorzugt handelt es sich bei der Energiezufuhrvorrichtung 100 um eine Heizvorrichtung.

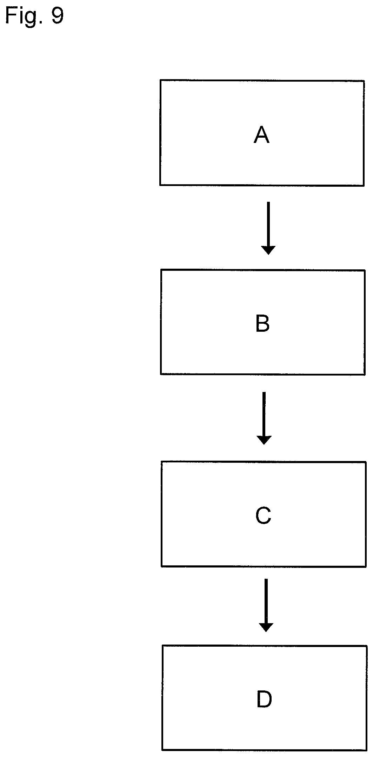

Das erfindungsgemäße Verfahren gemäß einem Ausführungsbeispiel der Erfindung ist schematisch in Fig. 9 dargestellt. Dabei sind die einzelnen Schritte folgendermaßen bezeichnet:
A: Leiten des Prozessgases durch mindestens ein in einer Filterkammer angeordnetes Filterelement,
B: Erzeugen einer Fluidströmung,
C: Zumindest teilweises Entnehmen des Filterrückstandes aus der Filterkammer,
D: Zumindest teilweises Fördern des Filterrückstands in der Fluidströmung zurück in die Filterkammer.

## Patentansprüche

1. Filtervorrichtung (1) zum Filtern eines Prozessgases, insbesondere eines Prozessgases einer Vorrichtung (101) zur additiven Herstellung dreidimensionaler Objekte,
wobei die Filtervorrichtung (1) umfasst:
- eine Filterkammer (10), die einen Prozessgaseinlass (91) und einen Prozessgasauslass (92) aufweist,
- mindestens ein in der Filterkammer angeordnetes Filterelement (20), wobei der Prozessgaseinlass, der Prozessgasauslass und das mindestens eine Filterelement (20) so angeordnet sind, dass das Prozessgas, das über den Prozessgaseinlass in die Filterkammer (10) eintritt und über den Prozessgasauslass die Filterkammer wieder verlässt, mittels des mindestens einen Filterelements (20) gefiltert wird, wobei ein Filterrückstand verbleibt,
- wobei die Filterkammer (10) einen ersten Sammelbereich (12) zum Sammeln von vom mindestens einen Filterelement (20) abgelösten Filterrückstand aufweist, und einen vom ersten Sammelbereich (12) zumindest bereichsweise räumlich getrennten zweiten Sammelbereich (13), und
- eine Fluidströmungserzeugungsvorrichtung (40, 40'), die dazu ausgebildet ist, eine Fluidströmung zu erzeugen, und
- eine Fördervorrichtung (50) zum Fördern des Filterrückstands in der Fluidströmung, wobei die Fördervorrichtung (50) einen mit dem ersten Sammelbereich (12) verbundenen Austrittsbereich (51, 51") aufweist, der Austrittsbereich (51, 51") eine Förderfluidzuführung (42, 42") und einen Förderfluidausgang (53, 53") aufweist, und wobei der Förderfluidausgang (53, 53") durch eine Förderleitung (54) mit dem zweiten Sammelbereich (13, 13') verbunden ist, um den abgelösten Filterrückstand zumindest teilweise vom ersten Sammelbereich (12) in den zweiten Sammelbereich (13) zu fördern, sodass
der Filterrückstand zumindest teilweise der Filterkammer (10) entnommen und in die Filterkammer (10) zurück gefördert wird.

2. Filtervorrichtung (1) gemäß Anspruch 1,
wobei die Filtervorrichtung einen an die Filterkammer (10) lösbar angekoppelten oder lösbar ankoppelbaren Abfallbehälter (80) umfasst,
wobei bevorzugt ein Innenraum des an die Filterkammer (10) lösbar angekoppelten Abfallbehälters (80) von einem Inneren der Filterkammer (10) durch eine erste Absperrvorrichtung (81) fluiddicht abtrennbar ist.

3. Filtervorrichtung (1) gemäß einem der vorstehenden Ansprüche,
wobei der erste Sammelbereich (12) und der zweite Sammelbereich (13) in einer Betriebsposition der Filtervorrichtung (1) unterhalb des mindestens einen Filterelements (20) angeordnet sind, und wobei zumindest der erste Sammelbereich (12) eine Öffnung nach oben hin aufweist,
wobei bevorzugt der zweite Sammelbereich (13) zumindest teilweise unterhalb des ersten Sammelbereichs (12) angeordnet ist.

4. Filtervorrichtung (1) gemäß einem der Ansprüche 1 bis 3, wobei eine Trennwand (70, 70') den zweiten Sammelbereich (13) von einem Inneren der Filterkammer (10) zumindest bereichsweise abgrenzt, wobei bevorzugt die Trennwand (70, 70') zwischen dem ersten Sammelbereich (12) und dem zweiten Sammelbereich (13) angeordnet ist,
wobei vorzugsweise die Trennwand (70, 70') derart in der Filterkammer (10) angeordnet ist, dass der in den zweiten Sammelbereich (13) geförderte Filterrückstand zumindest teilweise an ihr aufprallt, oder die Trennwand (70, 70') derart in der Filterkammer angeordnet ist, dass von dem aus dem Auffangbehälter (80') in den zweiten Sammelbereich (13') strömenden Fluid mitgeführter Filterrückstand zumindest teilweise von ihr im zweiten Sammelbereich (13') zurückgehalten wird.

5. Filtervorrichtung (1) gemäß einem der Ansprüche 1 bis 4,
wobei die Förderfluidzuführung (42) eine Düse umfasst, die so ausgebildet und/oder angeordnet ist, dass die durch die Düse geleitete Fluidströmung derart beschleunigt wird, dass ein Ansaugdruck zum Fördern des Filterrückstands aus dem ersten Sammelbereich (12) und optional eines im ersten Sammelbereich (12) befindlichen Fluids in den Austrittsbereich (51) erzeugt wird,
wobei die Düse bevorzugt als Ejektordüse oder Venturidüse ausgebildet ist.

6. Filtervorrichtung (1) gemäß einem der Ansprüche 1 bis 5, wobei die Förderleitung (54) mindestens eine lokal begrenzte Querschnittsverengung (541) umfasst,
wobei bevorzugt eine Innenquerschnittsfläche der Förderleitung im Bereich der Querschnittsverengung (541) um mindestens 25%, mehr bevorzugt mindestens 50%, besonders bevorzugt mindestens 75% gegenüber einer Innenquerschnittsfläche stromaufwärts der Querschnittsverengung (541) vermindert ist, und/oder
wobei bevorzugt die Querschnittsverengung (541) im Bereich des Förderfluidausgangs angeordnet ist, und/oder
wobei die Förderleitung stromabwärts des Bereichs der Querschnittsverengung (541) einen Diffusor aufweist.

7. Filtervorrichtung (1) gemäß einem der Ansprüche 1 bis 6,
wobei die Förderfluidzuführung (42, 42") mit einem Förderfluidreservoir (41) verbunden ist,
wobei bevorzugt das Förderfluidreservoir (41) ein unter Druck stehendes Gas beinhaltet, mehr bevorzugt ein Inertgas oder ein Gemisch aus einem Inertgas und einem Passivierungsmittel, insbesondere einem Gemisch aus einem Inertgas und Sauerstoff, und/oder
wobei die Förderfluidzuführung (42, 42") so mit der Filterkammer (10) verbunden ist, dass zumindest ein Teil des gefilterten Prozessgases in den Austrittsbereich (51, 51") gefördert wird,
wobei die Fluidströmungserzeugungsvorrichtung (40, 40') bevorzugt ein der Förderfluidzuführung (42, 42") zugeordnetes Gebläse und/oder einen der Förderfluidzuführung (42, 42") zugeordneten Verdichter umfasst.

8. Filtervorrichtung (1) gemäß einem der Ansprüche 1 bis 7,
wobei die Filtervorrichtung (1) eine Passivierungsmittelzufuhrvorrichtung umfasst, die ausgebildet ist, die Fluidströmung mit einem Passivierungsmittel zu versetzen,
wobei das Passivierungsmittel geeignet ist, den Filterrückstand durch eine chemische Reaktion zumindest teilweise zu passivieren,
wobei bevorzugt das Passivierungsmittel ein gasförmiges Passivierungsmittel und/oder ein Oxidationsmittel, insbesondere Sauerstoff, ist.

9. Filtervorrichtung (1) gemäß einem der Ansprüche 1 bis 8, wobei die Filtervorrichtung (1) eine Energiezufuhrvorrichtung (100), insbesondere in Form einer Heizvorrichtung, umfasst, die ausgebildet und/oder angeordnet ist, die Fluidströmung und/oder das Passivierungsmittel vor einem Zeitpunkt seines Zusetzens zu der Fluidströmung mit Energie zu beaufschlagen.

10. Filtervorrichtung (1) gemäß einem der Ansprüche 1 bis 9, wobei die Filtervorrichtung weiter eine Aufbringvorrichtung zum Aufbringen eines Filterhilfsstoffs, insbesondere eines pulverförmigen Filterhilfsstoffs, auf das mindestens eine Filterelement (20) umfasst.

11. Vorrichtung (101) zur additiven Herstellung dreidimensionaler Objekte (102) umfassend
eine Prozesskammer (103), in der die additive Herstellung erfolgt,
eine Prozessgasfördervorrichtung zum Fördern eines die Prozesskammer (103) von einem Prozesskammereingang (132) zu einem Prozesskammerausgang (134) durchströmenden Prozessgases, wobei die Prozessgasfördervorrichtung ausgebildet ist, das Fördern zwischen dem Prozesskammereingang (132) und dem Prozesskammerausgang (134) bevorzugt zumindest teilweise im Kreislauf zu bewirken,
eine Filtervorrichtung (1) gemäß einem der Ansprüche 1 bis 10,
wobei die Prozesskammer (103) so mit der Filtervorrichtung (1) verbunden ist, dass aus der Prozesskammer (103) durch den Prozesskammerausgang (134) austretendes Prozessgas in einen Prozessgaseinlass (91) der Filtervorrichtung (1) geleitet wird.

12. Verfahren zum Filtern eines Prozessgases, insbesondere eines Prozessgases einer additiven Herstellungsvorrichtung (101), und Nachbehandeln eines Filterrückstands in einer Filtervorrichtung (1) gemäß einem der Ansprüche 1 bis 10,
umfassend die Schritte:
- Leiten des Prozessgases durch das mindestens eine in der Filterkammer (10) angeordnete Filterelement (20),
- Erzeugen einer Fluidströmung,
- zumindest teilweises Entnehmen des Filterrückstandes aus der Filterkammer (10), und
- zumindest teilweises Fördern des Filterrückstands in der Fluidströmung zurück in die Filterkammer (10), und/oder
zumindest teilweises Fördern des Filterrückstands in einen Auffangbehälter (80'), wobei während des Förderns des Filterrückstands in der Fluidströmung Fluid vom Auffangbehälter (80') in die Filterkammer (10) zurück strömt.

## Claims

1. A filter device (1) for filtering a process gas, in particular a process gas of a device (101) for the additive manufacture of three-dimensional objects,
wherein the filter device (1) comprises:
- a filter chamber (10) having a process gas inlet (91) and a process gas outlet (92),
- at least one filter element (20) arranged in the filter chamber, wherein the process gas inlet, the process gas outlet, and the at least one filter element (20) are arranged in such a way that the process gas entering the filter chamber (10) via the process gas inlet and leaving the filter chamber again via the process gas outlet is filtered by means of the at least one filter element (20), leaving behind a filter residue,
- wherein the filter chamber (10) comprises a first collecting area (12) for collecting filter residue detached from the at least one filter element (20), and a second collecting area (13) spatially separated from the first collecting area (12) at least in some areas, and
- a fluid flow generating device (40, 40') configured to generate a fluid flow, and
- a conveying device (50) for conveying the filter residue in the fluid flow, wherein the conveying device (50) comprises an outlet area (51, 51") connected to the first collecting area (12), the outlet area (51, 51") comprising a conveying fluid supply (42, 42") and a conveying fluid outlet (53, 53"), and wherein the conveying fluid outlet (53, 53") is connected to the second collecting area (13, 13') by a conveying line (54) in order to convey the detached filter residue at least partially from the first collecting area (12) into the second collecting area (13), so that
the filter residue is at least partially removed from the filter chamber (10) and conveyed back into the filter chamber (10).

2. Filter device (1) according to claim 1,
wherein the filter device comprises a waste container (80) detachably coupled or detachably couplable to the filter chamber (10),
wherein preferably an interior space of the waste container (80) detachably coupled to the filter chamber (10) can be separated in a fluid-tight manner from an interior of the filter chamber (10) by a first shut-off device (81).

3. Filter device (1) according to one of the preceding claims,
wherein the first collecting area (12) and the second collecting area (13) are arranged below the at least one filter element (20) in an operating position of the filter device (1), and wherein at least the first collecting area (12) has an opening facing towards the top,
wherein the second collecting area (13) is preferably arranged at least partially below the first collecting area (12).

4. Filter device (1) according to one of claims 1 to 3, wherein a partition wall (70, 70') separates the second collecting area (13) from an interior of the filter chamber (10) at least in some areas, wherein the partition wall (70, 70') is preferably arranged between the first collecting area (12) and the second collecting area (13),
wherein the partition wall (70, 70') is preferably arranged in the filter chamber (10) in such a way that the filter residue conveyed into the second collecting area (13) impinges at least partially on the partition wall, or the partition wall (70, 70') is arranged in the filter chamber in such a way that the filter residue carried along by the fluid flowing from the collection container (80') into the second collecting area (13') is at least partially retained in the second collecting area (13') by the partition wall.

5. Filter device (1) according to one of claims 1 to 4,
wherein the conveying fluid supply (42) comprises a nozzle which is configured and/or arranged in such a way that the fluid flow conducted through the nozzle is accelerated in such a manner that a suction pressure for conveying the filter residue from the first collecting area (12), and optionally a fluid located in the first collecting area (12), into the outlet area (51),
wherein the nozzle is preferably formed as an ejector nozzle or a venturi nozzle.

6. Filter device (1) according to one of claims 1 to 5, wherein the conveying line (54) comprises at least one locally limited cross-sectional constriction (541),
wherein preferably an internal cross-sectional area of the conveying line in the region of the cross-sectional constriction (541) is reduced by at least 25%, more preferably by at least 50%, particularly preferably by at least 75% compared to an internal cross-sectional area upstream of the cross-sectional constriction (541), and/or
wherein preferably the cross-sectional constriction (541) is arranged in the region of the conveying fluid outlet, and/or
wherein the conveying line comprises a diffuser downstream of the region of the cross-sectional constriction (541).

7. Filter device (1) according to one of claims 1 to 6,
wherein the conveying fluid supply (42, 42") is connected to a conveying fluid reservoir (41),
wherein preferably the conveying fluid reservoir (41) contains a pressurized gas, more preferably an inert gas or a mixture of an inert gas and a passivating agent, in particular a mixture of an inert gas and oxygen, and/or
wherein the conveying fluid supply (42, 42") is connected to the filter chamber (10) in such a way that at least part of the filtered process gas is conveyed to the outlet area (51, 51"),
wherein the fluid flow generating device (40, 40') preferably comprises a blower associated with the conveying fluid supply (42, 42") and/or a compressor associated with the conveying fluid supply (42, 42").

8. Filter device (1) according to one of claims 1 to 7,
wherein the filter device (1) comprises a passivating agent supply device configured to add a passivating agent to the fluid flow,
wherein the passivating agent is suitable for at least partially passivating the filter residue by means of a chemical reaction,
wherein preferably the passivating agent is a passivating agent in gaseous form and/or an oxidizing agent, in particular oxygen.

9. Filter device (1) according to one of claims 1 to 8, wherein the filter device (1) comprises an energy supply device (100), in particular in the form of a heating device, which is configured and/or arranged to apply energy to the fluid flow and/or the passivating agent before it is added to the fluid flow.

10. Filter device (1) according to one of claims 1 to 9, wherein the filter device further comprises an application device for applying a filter aid, in particular a filter aid in powder form, to the at least one filter element (20).

11. A device (101) for the additive manufacture of three-dimensional objects (102) comprising
a process chamber (103) in which the additive manufacture takes place,
a process gas conveying device for conveying a process gas flowing through the process chamber (103) from a process chamber inlet (132) to a process chamber outlet (134), wherein the process gas conveying device is configured to preferably effect the conveying between the process chamber inlet (132) and the process chamber outlet (134) at least partially in a circuit,
a filter device (1) according to one of claims 1 to 10,
wherein the process chamber (103) is connected to the filter device (1) in such a way that process gas exiting the process chamber (103) through the process chamber outlet (134) is fed into a process gas inlet (91) of the filter device (1).

12. A method for filtering a process gas, in particular a process gas of an additive manufacturing device (101), and post-treating a filter residue in a filter device (1) according to one of claims 1 to 10,
comprising the steps:
- passing the process gas through the at least one filter element (20) arranged in the filter chamber (10),
- generating a fluid flow,
- at least partially removing the filter residue from the filter chamber (10), and
- at least partially conveying the filter residue in the fluid flow back into the filter chamber (10), and/or
at least partially conveying the filter residue into a collection container (80'), wherein during the conveying of the filter residue in the fluid flow, fluid flows back from the collection container (80') into the filter chamber (10).

## Revendications

1. Dispositif de filtration (1) pour filtrer un gaz de traitement, en particulier un gaz de traitement d'un dispositif (101) pour la fabrication additive d'objets tridimensionnels,
le dispositif de filtration (1) comprenant :
- une chambre de filtration (10) qui présente une entrée de gaz de traitement (91) et une sortie de gaz de traitement (92),
- au moins un élément de filtration (20) disposé dans la chambre de filtration, l'entrée de gaz de traitement, la sortie de gaz de traitement et l'au moins un élément de filtration (20) étant disposés de telle sorte que le gaz de traitement qui entre dans la chambre de filtration (10) par l'entrée de gaz de traitement et sort de nouveau la chambre de filtration par la sortie de gaz de traitement soit filtré au moyen de l'au moins un élément de filtration (20), un résidu de filtration restant,
- la chambre de filtration (10) présentant une première zone de collecte (12) pour collecter le résidu de filtration détaché de l'au moins un élément de filtration (20), et une deuxième zone de collecte (13) séparée spatialement au moins par zones de la première zone de collecte (12), et
- un dispositif de génération d'écoulement de fluide (40, 40') qui est réalisé pour générer un écoulement de fluide, et
- un dispositif de transport (50) pour transporter le résidu de filtration dans l'écoulement de fluide, le dispositif de transport (50) présentant une zone de sortie (51, 51") reliée à la première zone de collecte (12), la zone de sortie (51, 51") présentant une amenée de fluide de transport (42, 42") et une sortie de fluide de transport (53, 53"), et la sortie de fluide de transport (53, 53") étant reliée par une conduite de transport (54) à la deuxième zone de collecte (13, 13'), afin de transporter le résidu de filtration détaché au moins en partie de la première zone de collecte (12) dans la deuxième zone de collecte (13), de sorte que
le résidu de filtration soit prélevé au moins en partie de la chambre de filtration (10) et soit transporté en retour dans la chambre de filtration (10).

2. Dispositif de filtration (1) selon la revendication 1,
le dispositif de filtration comprenant un récipient à déchets (80) couplé de manière amovible ou pouvant être couplé de manière amovible à la chambre de filtration (10),
de préférence un espace intérieur du récipient à déchets (80) couplé de manière amovible à la chambre de filtration (10) pouvant être séparé de manière étanche aux fluides d'un intérieur de la chambre de filtration (10) par un premier dispositif d'arrêt (81).

3. Dispositif de filtration (1) selon l'une quelconque des revendications précédentes,
la première zone de collecte (12) et la deuxième zone de collecte (13) étant disposées dans une position de fonctionnement du dispositif de filtration (1) en dessous de l'au moins un élément de filtration (20), et au moins la première zone de collecte (12) présentant une ouverture vers le haut,
de préférence la deuxième zone de collecte (13) étant disposée au moins en partie en dessous de la première zone de collecte (12).

4. Dispositif de filtration (1) selon l'une quelconque des revendications 1 à 3, une paroi de séparation (70, 70') délimitant au moins par zones la deuxième zone de collecte (13) d'un intérieur de la chambre de filtration (10), de préférence la paroi de séparation (70, 70') étant disposée entre la première zone de collecte (12) et la deuxième zone de collecte (13),
de préférence la paroi de séparation (70, 70') étant disposée dans la chambre de filtration (10) de telle sorte que le résidu de filtration transporté dans la deuxième zone de collecte (13) heurte celle-ci au moins en partie, ou la paroi de séparation (70, 70') étant disposée dans la chambre de filtration de telle sorte que le résidu de filtration entraîné par le fluide s'écoulant hors du récipient de collecte (80') dans la deuxième zone de collecte (13') soit retenu au moins en partie par celle-ci dans la deuxième zone de collecte (13').

5. Dispositif de filtration (1) selon l'une quelconque des revendications 1 à 4,
l'amenée de fluide de transport (42) comprenant une buse qui est réalisée et/ou disposée de telle sorte que l'écoulement de fluide guidé à travers la buse soit accéléré de telle sorte qu'une pression d'aspiration soit générée pour transporter le résidu de filtration hors de la première zone de collecte (12) et en option d'un fluide se trouvant dans la première zone de collecte (12) dans la zone de sortie (51),
la buse étant réalisée de préférence sous forme de buse d'éjecteur ou de buse Venturi.

6. Dispositif de filtration (1) selon l'une quelconque des revendications 1 à 5, la conduite de transport (54) comprenant au moins un rétrécissement de section transversale (541) limité localement,
de préférence une surface de section transversale intérieure de la conduite de transport dans la zone du rétrécissement de section transversale (541) étant réduite d'au moins 25 %, de manière davantage préférée d'au moins 50 %, de manière particulièrement préférée d'au moins 75 % par rapport à une surface de section transversale intérieure en amont du rétrécissement de section transversale (541), et/ou
de préférence le rétrécissement de section transversale (541) étant disposé dans la zone de la sortie de fluide de transport, et/ou
la conduite de transport présentant un diffuseur en aval de la zone du rétrécissement de section transversale (541).

7. Dispositif de filtration (1) selon l'une quelconque des revendications 1 à 6,
l'amenée de fluide de transport (42, 42") étant reliée à un réservoir de fluide de transport (41),
de préférence le réservoir de fluide de transport (41) contenant un gaz sous pression, plus préférablement un gaz inerte ou un mélange d'un gaz inerte et d'un agent de passivation, en particulier un mélange d'un gaz inerte et d'oxygène, et/ou
l'amenée de fluide de transport (42, 42") étant reliée à la chambre de filtration (10) de telle sorte qu'au moins une partie du gaz de traitement filtré soit transportée dans la zone de sortie (51, 51"),
le dispositif de génération d'écoulement de fluide (40, 40') comprenant de préférence une soufflante associée à l'amenée de fluide de transport (42, 42") et/ou un compresseur associé à l'amenée de fluide de transport (42, 42").

8. Dispositif de filtration (1) selon l'une quelconque des revendications 1 à 7,
le dispositif de filtration (1) comprenant un dispositif d'amenée d'agent de passivation qui est réalisé pour mélanger l'écoulement de fluide avec un agent de passivation,
l'agent de passivation étant approprié pour passiver au moins en partie le résidu de filtration par une réaction chimique,
de préférence l'agent de passivation étant un agent de passivation gazeux et/ou un agent oxydant, en particulier de l'oxygène.

9. Dispositif de filtration (1) selon l'une quelconque des revendications 1 à 8, le dispositif de filtration (1) comprenant un dispositif d'amenée d'énergie (100), en particulier sous forme d'un dispositif de chauffage, qui est réalisé et/ou disposé pour alimenter en énergie l'écoulement de fluide et/ou l'agent de passivation avant un moment de son ajout à l'écoulement de fluide.

10. Dispositif de filtration (1) selon l'une quelconque des revendications 1 à 9, le dispositif de filtration comprenant en outre un dispositif d'application pour appliquer un adjuvant de filtration, en particulier un adjuvant de filtration pulvérulent, sur l'au moins un élément filtrant (20).

11. Dispositif (101) pour la fabrication additive d'objets tridimensionnels (102) comprenant
une chambre de traitement (103) dans laquelle la fabrication additive a lieu,
un dispositif de transport de gaz de traitement pour transporter un gaz de traitement traversant la chambre de traitement (103) d'une entrée de chambre de traitement (132) à une sortie de chambre de traitement (134), le dispositif de transport de gaz de traitement étant réalisé pour provoquer le transport entre l'entrée de chambre de traitement (132) et la sortie de chambre de traitement (134) de préférence au moins en partie en circuit,
un dispositif de filtration (1) selon l'une quelconque des revendications 1 à 10,
la chambre de traitement (103) étant reliée au dispositif de filtration (1) de telle sorte que le gaz de traitement sortant de la chambre de traitement (103) par la sortie de chambre de traitement (134) soit guidé dans une entrée de gaz de traitement (91) du dispositif de filtration (1).

12. Procédé de filtration d'un gaz de traitement, en particulier d'un gaz de traitement d'un dispositif de fabrication additive (101), et de post-traitement d'un résidu de filtration dans un dispositif de filtration (1) selon l'une quelconque des revendications 1 à 10,
comprenant les étapes suivantes :
- guidage du gaz de traitement à travers l'au moins un élément de filtration (20) disposé dans la chambre de filtration (10),
- génération d'un écoulement de fluide,
- prélèvement au moins partiel du résidu de filtration de la chambre de filtration (10), et
- transport au moins partiel du résidu de filtration dans l'écoulement de fluide en retour dans la chambre de filtration (10), et/ou
transport au moins partiel du résidu de filtration dans un récipient de collecte (80'), du fluide s'écoulant en retour du récipient de collecte (80') dans la chambre de filtration (10) pendant le transport du résidu de filtration dans l'écoulement de fluide.
